(19) Europäisches Patentamt
European Patent Office
Office européen des brevets

(11) EP 3 479 086 B1

(12) EUROPÄISCHE PATENTSCHRIFT

(45) Veröffentlichungstag und Bekanntmachung des Hinweises auf die Patenterteilung:
15.02.2023  Patentblatt 2023/07

(21) Anmeldenummer: 17730134.8

(22) Anmeldetag: 14.06.2017

(51) Internationale Patentklassifikation (IPC):
G01J 5/08 (1968.09)    G01J 5/06 (1968.09)
G01J 5/02 (1968.09)    G01J 5/52 (1968.09)
G01J 5/00 (1968.09)    H04N 5/33 (1974.07)
H04N 5/365 (2011.01)

(52) Gemeinsame Patentklassifikation (CPC):
G01J 5/025; G01J 5/0265; G01J 5/06; G01J 5/07;
G01J 5/0804; G01J 5/0805; G01J 5/0859;
G01J 5/48; G01J 5/53; G01J 5/80; H04N 5/33;
H04N 25/60; H04N 25/671; H04N 25/673;
G01J 2005/0077;                          (Forts.)

(86) Internationale Anmeldenummer:
PCT/EP2017/064505

(87) Internationale Veröffentlichungsnummer:
WO 2018/001734 (04.01.2018 Gazette 2018/01)

(54) **VERFAHREN ZUR KONTAKTFREIEN ERMITTLUNG EINER TEMPERATUR SOWIE INFRAROT-MESSSYSTEM**

METHOD FOR DETERMINING A TEMPERATURE WITHOUT CONTACT AND INFRARED MEASURING SYSTEM

PROCÉDÉ DE MESURE SANS CONTACT D'UNE TEMPÉRATURE AINSI QUE SYSTÈME DE MESURE PAR INFRAROUGE

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR

(30) Priorität: 30.06.2016  DE 102016211812

(43) Veröffentlichungstag der Anmeldung:
08.05.2019  Patentblatt 2019/19

(73) Patentinhaber: Robert Bosch GmbH
70442 Stuttgart (DE)

(72) Erfinder:
• FRANK, Michael
  75015 Bretten (DE)
• SENZ, Volkmar
  72555 Metzingen (DE)
• BADEJA, Michael
  72764 Reutlingen (DE)
• RUMBERG, Axel
  76199 Karlsruhe (DE)
• KRUEGER, Michael
  72770 Reutlingen (DE)
• DITTMER, Helge
  72070 Tuebingen (DE)

(56) Entgegenhaltungen:
US-A1- 2001 040 216     US-A1- 2005 029 453
US-A1- 2008 210 872     US-A1- 2010 046 577

• VIDAS STEPHEN ET AL: "Ad Hoc Radiometric Calibration of a Thermal-Infrared Camera", 2013 INTERNATIONAL CONFERENCE ON DIGITAL IMAGE COMPUTING: TECHNIQUES AND APPLICATIONS (DICTA), IEEE, 26. November 2013 (2013-11-26), Seiten 1-8, XP032536458, DOI: 10.1109/DICTA.2013.6691478 [gefunden am 2013-12-20]

- **SCHULZ M ET AL: "NONUNIFORMITY CORRECTION AND CORRECTABILITY OF INFRARED FOCAL PLANE ARRAYS", OPTOMECHATRONIC MICRO/NANO DEVICES AND COMPONENTS III : 8 - 10 OCTOBER 2007, LAUSANNE, SWITZERLAND;PROCEEDINGS OF SPIE, SPIE, BELLINGHAM, WASH, Bd. 2470, 19. April 1995 (1995-04-19), Seiten 200-211, XP000671478, DOI: 10.1117/12.210050 ISBN: 978-1-62841-730-2**
- **OLIVIER RIOU ET AL: "Nonuniformity correction and thermal drift compensation of thermal infrared camera", PROCEEDINGS VOLUME 9025IS&T/SPIE ELECTRONIC IMAGING | 2-6 FEBRUARY 2014INTELLIGENT ROBOTS AND COMPUTER VISION XXXI: ALGORITHMS AND TECHNIQUES, Bd. 5405, 12. April 2004 (2004-04-12), Seite 294, XP055402632, US ISSN: 0277-786X, DOI: 10.1117/12.547807**

(52) Gemeinsame Patentklassifikation (CPC): (Forts.)
G01J 2005/065; G01J 2005/066; G01J 2005/526

**Beschreibung**

Die Erfindung betrifft ein Verfahren zur kontaktfreien Ermittlung einer Temperatur einer Oberfläche, insbesondere zur kontaktfreien Ermittlung einer Temperaturverteilung einer Oberfläche, sowie ein entsprechendes Infrarot-Messsystem.

Stand der Technik

Vorrichtungen und Verfahren zur kontaktfreien Ermittlung einer Temperatur einer Oberfläche, insbesondere zur kontaktfreien Ermittlung einer Temperaturverteilung einer Oberfläche, sind im Stand der Technik bekannt und finden vielseitig Anwendung, beispielsweise zur Sicherheitsüberprüfung elektrischer Schaltungen, zur Fehlersuche in maschinellen Abläufen oder zur Identifikation unzureichender Wärmeisolation im Rahmen einer Wärme- und/oder Kältedämmung. Infrarotthermometer weisen gegenüber konventionellen Temperaturmessgeräten den Vorteil des kontaktfreien und schnellen Messens auf und lassen sich insbesondere dann einsetzen, wenn zu vermessende Bereiche nur schwer oder gar nicht zugänglich sind. Die Temperaturmessung mittels eines infrarotsensitiven Thermometers basiert dabei auf Detektion von Wärmestrahlung, d.h. Infrarotstrahlung insbesondere in einem Wellenlängenbereich zwischen 3 $\mu$m und 50 $\mu$m, die von jedem Gegenstand abhängig von seiner Temperatur, insbesondere seiner Oberflächentemperatur, mit unterschiedlicher Intensität emittiert wird. Aus einer gemessenen Intensität der emittierten Wärmestrahlung mittels des Temperaturmessgeräts kann eine Oberflächentemperatur des emittierenden Körpers bestimmt werden.

Im Stand der Technik bekannte Infrarotthermometer lassen sich im Wesentlichen in zwei Ausführungsformen unterscheiden. Vorrichtungen erster Art, sogenannte Spot-Thermometer, umfassen typischerweise einen Infrarotsensor, eine Linse und eine Anzeige und weisen typischerweise ein kegelförmiges, bevorzugt kleines Messvolumen auf, aus dem Wärmestrahlung nachgewiesen wird. US 6,659,639 A1 und US 2009/0304042 A1 beschreiben Vorrichtungen und Verfahren eines Messgeräts dieser Art.

Infrarotthermometer einer zweiten Art, sogenannte Wärmebildkameras, weisen hingegen typischerweise einen infrarotsensitiven Bildsensor, ein Linsensystem sowie einen Bildschirm auf und erlauben, ähnlich einer im visuellen Spektralbereich arbeitenden Kamera, einen Gegenstand im infraroten Bereich des Strahlungsspektrums zu untersuchen und auf dem Bildschirm als zweidimensionales, farbkodiertes Abbild des Gegenstands auszugeben. US 2009/0302219 A1 und US 7,652,251 A1 beschreiben Vorrichtungen und Verfahren dieser zweiten Art.

Aus der DE 20 2013 008 745 U1 ist eine Wärmebildkamera mit einem Sensorpixel aufweisenden Sensorfeld bekannt, bei der eine Blende im Strahlengang der Wärmebildkamera angeordnet ist, die mit ihrer Projektion und/oder mit ihrem Schattenwurf das Sensorfeld in wenigstens einen wenigstens ein Sensorpixel enthaltenden, überschatteten Bereich und in wenigstens einen unüberschatteten Bereich unterteilt. Mithilfe eines von dem wenigstens einen überschatteten Sensorpixel ermittelten Mess- und/oder Referenzwertes kann eine Offsetkorrektur der Wärmebildkamera ohne einen zumindest zeitweise sämtliche Sensorpixel abdeckenden Shutter (Verschlusselement) durchgeführt werden.

Ferner ist aus der DE 10 2008 041 750 A1 ein mikrostrukturiertes, eine elektrische Eigenschaft in ihrem Wert temperaturabhängig veränderndes Referenzpixel für Sensoren bekannt, welches mit einem Substrat thermisch gekoppelt ist, aber gegenüber diesem Substrat elektrisch isoliert ist. Unter Verwendung dieses Referenzpixels wird in einem Verfahren zum Betrieb eines Temperatursensors eine zu messende Temperatur bestimmt, wobei das Referenzpixel zur Referenzierung herangezogen wird.

Kalibrierverfahren bzw. Korrekturverfahren von Wärmebildkameras unter Verwendung von Shuttern sind bekannt aus Vidas et al., "Ad Hoc Radiometrie Calibration of a ThermalInfrared Camera", 2013 International Conference on digital image computing: techniques and applications (dicta), IEEE, 26. November 2013 (2013-11-26), Seiten 1-8, XP032536458 und Schulz et al., "Nonuniformity correction and correctability of infrared focal plane arrays", Optomechatronic micro/nano devices and components III: 8-10. Oktober 2007, Lausanne, Switzerland und Olivier et al., "Nonuniformity correction and thermal drift compensation of thermal infrared camera", Proceedings Volume 9025 IS&T/SPIE Electronic imaging, 2-6 Februar 2014.

Ferner ist aus EP 2 690 416 A1 ein Infrarot-Bildsensor bekannt, der mindestens ein Referenzpixel aufweist, wobei je eine Differenzschaltung zum Erfassen eines ersten Differenzsignals und eines zweiten Differenzsignal vorgesehen ist, und eine Pixelsignal-Berechnungseinheit vorgesehen ist, die ein Signal für jedes der Pixel auf der Basis des ersten Differenzsignals und des zweiten Differenzsignal berechnet. Ferner sind aus WO 2007/015235 A1 und aus DE 20 2013 008745 U1 die Verwendung von Referenzpixeln bekannt.

Aus WO 01/36926 A1 ist eine Infrarotstrahlungsdetektoranordnung bekannt, die eine Mehrzahl von Messpixeln sowie mindestens ein Blindpixel enthält, wobei das Blindpixel vorgesehen ist, ein Signal bereitzustellen, das eine thermische Verzerrung der Infrarotstrahlungsdetektoranordnung anzeigt. Aus US 2010/193706 A1 ist ein Infrarotsensor bekannt, bei dem um oder in einem Pixelarray verteilte Blindpixel verwendet werden, um eine Temperaturverteilung über des Pixelarray zu ermitteln. Ferner ist aus DE 10 2012 208220 A1 die Verwendung eines Blindpixels bekannt.

Weitere Beispiele für Kalibrierverfahren von Infrarot-Detektorarrays finden sich in US 2001/040216 A1 und US 2010/046577 A1.

Aus der US 2005/029453 A1 ist ein Verfahren und eine Vorrichtung zur Bestimmung einer Variation von Kalibrierungsparametern eines Pixels eines Wärmebildsensors während eines Betriebs einer Aufnahmevorrichtung bekannt.

In der US 2008/210872 A1 ist eine Infrarotaufnahmekamera offenbart, die eine Fokussieroptik umfasst.

Offenbarung der Erfindung

Die Erfindung geht aus von einem Infrarot-Messsystem, insbesondere einer handgehaltenen Wärmebildkamera, zur kontaktfreien Ermittlung einer Temperatur einer Oberfläche, insbesondere zur kontaktfreien Ermittlung einer Temperaturverteilung einer Oberfläche. Das Infrarot-Messsystem weist zumindest ein Infrarot-Detektorarray mit einer Mehrzahl von Messpixeln, die jeweils ein Messsignal zur Ermittlung eines von einer Intensität der einfallenden Infrarotstrahlung abhängigen Temperaturmesswerts $T_{MP}$ bereitstellen, und einen Verschlussmechanismus zum Unterbinden eines Einfalls von Infrarotstrahlung auf das Infrarot-Detektorarray auf. Erfindungsgemäß ist eine Auswertevorrichtung des Infrarot-Messsystems dazu eingerichtet, das erfindungsgemäße Verfahren zur kontaktfreien Ermittlung einer Temperatur einer Oberfläche, insbesondere zur kontaktfreien Ermittlung einer Temperaturverteilung einer Oberfläche, durchzuführen.

Dem Verfahren liegt ein Infrarot-Messsystem, insbesondere eine handgehaltene Wärmebildkamera, zur kontaktfreien Ermittlung einer Temperaturverteilung einer Oberfläche zu Grunde, wie es im Folgenden beschrieben wird.

Das Infrarot-Messsystem, insbesondere die handgehaltene Wärmebildkamera, ist dazu eingerichtet, aus einem Messbereich auf der Oberfläche abgestrahlte Infrarotstrahlung, insbesondere Wärmestrahlung, insbesondere berührungslos zu detektieren. Das Infrarot-Messsystem ist dazu vorgesehen, eine Information auszugeben, die eine Temperatur der Oberfläche betrifft. Diese Information kann vorteilhaft als eine oder mehrere Temperaturangaben oder als eine Temperaturverteilung, besonders vorteilhaft als ein aus einer Vielzahl von ortsaufgelöst ermittelten Temperaturangaben zusammengesetztes Wärmebild, realisiert sein.

Unter dem "Messbereich" wird ein geometrischer, begrenzter Bereich verstanden, der eine Menge von Teilchen oder Bereichen des Gegenstands umfasst, deren Wärmestrahlung den Gegenstand in Richtung des Infrarot-Messsystems verlässt und von diesem zumindest teilweise erfasst wird. Je nach Material des Gegenstands, insbesondere je nach Transparenz des Gegenstands für Infrarotstrahlung, können Teilchen oder Bereichen von dem Infrarot-Messsystem erfasst werden, die sich unterschiedlich weit in dem Gegenstand befinden. Insbesondere kann unter "Gegenstand" neben einem Festkörper auch ein Fluid, insbesondere eine Flüssigkeit und ein Gas verstanden werden, dessen Temperatur in analoger Weise vermessen werden kann. Zur Vereinfachung der folgenden Beschreibung wird mit "Messbereich" insbesondere der Bereich auf einer Gegenstandsoberfläche gekennzeichnet, der sich im Wesentlichen aus der Schnittmenge zwischen einem Messvolumen - das Volumen, aus dem die erfindungsgemäße Vorrichtung Wärmestrahlung erfasst - und der Oberfläche des zu untersuchenden Gegenstands ergibt. Je nach Materialeigenschaft des Gegenstands kann dieser Messbereich aber auch Wärmestrahlung aus tieferen Schichten des Gegenstands umfassen.

Das Infrarot-Messsystem, insbesondere die handgehaltene Wärmebildkamera, weist zumindest ein Infrarot-Detektorarray sowie eine Auswertevorrichtung auf. Ferner kann das Infrarot-Messsystem in einer Ausführungsform des Infrarot-Messsystems eine Optik, insbesondere eine abbildende Optik, aufweisen. Eine Optik ist dazu vorgesehen, aus dem Messbereich emittierte Wärmestrahlung im Infrarotspektrum, vorzugsweise im mittleren Infrarotspektrum im Wellenlängenbereich zwischen 3 μm und 50 μm, auf eine Oberfläche des aus Sicht des Gegenstands hinter der Optik angeordneten Infrarot-Detektorarrays des Infrarot-Messsystems zu projizieren. In einer Ausführungsform des Infrarot-Messsystems kann die Optik auch dazu vorgesehen sein, ein Abbild des Messbereichs auf eine Oberfläche des Infrarot-Detektorarrays zu projizieren, bevorzugt ein Abbild des Messbereichs auf eine Oberfläche des Infrarot-Detektorarrays zu fokussieren. Eine Optik kann dazu Wärmestrahlung lenkende, leitende, bündelnde und/oder anderweitig in der räumlichen Ausbreitung beeinflussende optische Komponenten aufweisen, beispielsweise Linsen, Spiegel oder dergleichen. Ferner kann in einer Ausführungsform eine Optik dazu vorgesehen sein, eine Größe des auf einer Oberfläche befindlichen Messbereichs unter Verwendung der Optik veränderbar einzustellen, insbesondere stufenlos "zoombar" einzustellen.

Unter "vorgesehen" soll im Folgenden speziell "programmiert", "ausgelegt", "konzipiert" und/oder "ausgestattet" verstanden werden. Darunter, dass ein Objekt zu einer bestimmten Funktion "vorgesehen" ist, soll insbesondere verstanden werden, dass das Objekt diese bestimmte Funktion in zumindest einem Anwendungs- und/oder Betriebszustand erfüllt und/oder ausführt oder dazu ausgelegt ist, die Funktion zu erfüllen.

Das Infrarot-Detektorarray dient der Erfassung von aus dem Messbereich abgestrahlter und auf die Oberfläche des Infrarot-Detektorarrays geleiteter Infrarotstrahlung (Anmerkung: in dieser Schrift werden die Begriffe "Infrarotstrahlung" und "Wärmestrahlung" synonym verwendet).

Das Infrarot-Detektorarray weist zumindest eine Mehrzahl von Messpixeln auf. Die Messpixel des Infrarot-Detektorarrays sind jeweils an einer dem zu untersuchenden Gegenstand zugewandten Oberfläche des Infrarot-Detektorarrays angeordnet. Die Messpixel sind für aus dem Messbereich einfallende Infrarotstrahlung, insbesondere Wärmestrahlung, empfindlich. In Folge der Einstrahlung von Infrarotstrahlung mit der Leistung $P_{MP}$ erwärmt sich ein jeweiliges Messpixel um $\Delta T_{MP}$, wobei sich auf Grund der Erwärmung ein elektrischer Widerstand des Messpixels gegenüber einem durch das Messpixel fließenden Strom $I_{MP}$ ändert. Folglich verändert sich eine über das Messpixel abfallende Spannung. Diese Spannung kann in einer Ausführungsform der Infrarot-Messsystems als Messsignal verwendet werden.

Die Messpixel sind dazu vorgesehen, Strahlung aus dem Infrarotbereich, insbesondere dem mittleren Infrarotbereich im Wellenlängenbereich zwischen 3 μm und 50 μm, zu erfassen und in ein Messsignal, insbesondere in ein elektrisches Messsignal $U_{MP}$, umzuwandeln. Insbesondere ist jedes Messpixel dazu vorgesehen, ein elektrisches Messsignal $U_{MP}$, insbesondere ein Potential, bereitzustellen, dass mit der auf das Messpixel eingestrahlten Wärmeleistung $P_{MP}$ der Infrarotstrahlung korreliert. Somit stellen die Messpixel jeweils ein von einer Intensität der einfallenden Infrarotstrahlung abhängiges Messsignal $U_{MP}$ zur Ermittlung eines ebenfalls von der Intensität der einfallenden Infrarotstrahlung abhängenden Temperaturmesswerts $T_{MP}$ bereit. Insbesondere sei darauf hingewiesen, dass die jeweiligen Messsignale $U_{MP}$ eines jeden Messpixels unabhängig voneinander bereitgestellt werden oder bereitgestellt werden können.

Aus den derart bereitgestellten Messsignalen $U_{MP}$ ist jeweils ein Pixel-abhängiger Temperaturmesswert $T_{MP}$ ermittelbar. Unter Verwendung einer (beliebigen) Mehrzahl von Messpixeln des Infrarot-Detektorarrays kann somit - Beleuchtung mittels Infrarotstrahlung vorausgesetzt - eine Mehrzahl von Temperaturmesswerten $T_{MP}$ ermittelt werden. Insbesondere kann auf diese Weise eine Bildinformation für ein Wärmebild aus jeweils von dem zu untersuchenden Objekt in einen Raumwinkel des Messbereichs emittierter Infrarotstrahlung ermittelt werden.

In einer Ausführungsform des erfindungsgemäßen Infrarot-Messsystems sind die Messpixel als P/N-Dioden (Thermodioden) realisiert. Insbesondere kann das Infrarot-Detektorarray beispielsweise als ein Siliziumsensorchip realisiert sein, der als Detektorarray-Substrat Silizium aufweist. Auf diese Weise kann ein Infrarot-Detektorarray vorteilhaft als Halbleitersensor unter Anwendung von Halbleitertechnologie realisiert werden.

Ferner ist es unter Verwendung von P/N-Dioden vorteilhaft möglich, kleine Veränderungen der zu messenden Temperatur, d.h. der Infrarotstrahlung, zu erfassen und/oder Störsignale, die durch die Messelektronik des Halbleitersensors verursacht werden, zu eliminieren. Derartige Störsignale können beispielsweise eine Temperatur-Drift durch eine im Betrieb veränderte Temperatur der Messelektronik sein. Insbesondere können die Messsignale $U_{MP}$ auch auf ein Referenzsignal $U_{RP}$ bezogen ermittelt werden, beispielsweise als ein Differenzmesssignal $U_{MP} - U_{RP}$ (Spannungsdifferenz) gegenüber einem von einem Referenzpixel ausgegebenen Referenzsignal $U_{RP}$. Auf diese Weise können Temperaturänderungen, insbesondere Änderungen in der Intensität der einfallenden Infrarotstrahlung, die zu kleinen Differenzen oder Änderungen in den Messsignalen führen (beispielsweise im mV-Bereich), mittels eines Differenzverstärkers vorteilhaft genau und hochaufgelöst erfasst werden.

Jedes der Mehrzahl von Messpixeln ist mit der Auswertevorrichtung des Infrarot-Messsystems direkt oder indirekt über weitere zwischengeschaltete Bauelemente signaltechnisch verbindbar. Unter "verbinden eines Pixels" mit der Auswertevorrichtung ist insbesondere zu verstehen, dass die von einem Messpixel bereitgestellten Messsignale $U_{MP}$, in einer Ausführungsform auch ermittelte Spannungsdifferenzen $U_{MP} - U_{RP}$, an die Auswertevorrichtung weiterleitbar sind. Insbesondere wird explizit eingeschlossen, dass die Messsignale als Spannungsdifferenzen von einem Differenzverstärker oder einem vergleichbaren elektrischen Bauteil an die Auswertevorrichtung weitergeleitet werden. Insbesondere kann eine indirekte signaltechnische Verbindung der Messpixel mit der Auswertevorrichtung auch über Schaltelemente, beispielsweise Multiplexer oder andere Selektionsschaltungen, die dazu ausgelegt sind, Detektionssignale mehrerer Messpixel selektiv weiterzuleiten, realisiert werden. Auf diese Weise kann insbesondere erreicht werden, dass Detektionssignale einzelner Messpixel oder einer Gruppe von Messpixeln unabhängig von Detektionssignalen anderer Messpixel an die Auswertevorrichtung weitergeleitet und von dieser ausgewertet werden können.

Unter der Auswertevorrichtung zum Empfangen und Auswerten von Messsignalen des Infrarot-Detektorarrays soll eine Vorrichtung verstanden werden, die zumindest einen Informationseingang zur Annahme von Messsignalen, eine Informationsverarbeitungseinheit zur Bearbeitung, insbesondere Auswertung der angenommenen Messsignale, sowie eine Informationsausgabe zur Weitergabe der bearbeiteten und/oder ausgewerteten Messsignale aufweist. Unter bearbeiteten und/oder ausgewerteten Messsignalen sind insbesondere ausgewertete Temperaturmesswerte $T_{MP}$ zu verstehen. Vorteilhaft weist die Auswertevorrichtung Komponenten auf, die zumindest einen Prozessor, einen Speicher und ein Betriebsprogramm mit Auswerte- und Berechnungsroutinen umfassen. Insbesondere können die elektronischen Bauteile der Auswertevorrichtung auf einer Platine (Leiterplatte) angeordnet sein, bevorzugt auf einer gemeinsamen Platine mit einer Steuervorrichtung des Infrarot-Messsystems zur Steuerung des Infrarot-Messsystems, und besonders bevorzugt in Form eines Mikrokontrollers. Des Weiteren können die Steuervorrichtung und die Auswertevorrichtung auch als ein einzelnes Bauteil ausgeführt sein.

Die Auswertevorrichtung ist dazu vorgesehen, von dem Infrarot-Detektorarray bereitgestellte Messsignale zu empfangen, auszuwerten und basierend auf Messsignalen zumindest einer Mehrzahl von Messpixeln des Infrarot-Detektorarrays eine Auswertung der Temperatur des Messbereichs durchzuführen. Insbesondere ist die Auswertevorrichtung dazu vorgesehen, basierend auf Messsignalen zumindest einer (beliebigen) Mehrzahl von Messpixeln des Infrarot-Detektorarrays eine Auswertung eines oder mehrerer Temperaturmesswerte $T_{MP}$ durchzuführen. Die ausgewerteten Temperaturmesswerte $T_{MP}$ können von der Auswertevorrichtung zur weiteren Verarbeitung und/oder zur Ausgabe, insbesondere zur Ausgabe an einen Benutzer des Infrarot-Messsystems mittels einer Ausgabevorrichtung und/oder zur Ausgabe an ein externes Gerät mittels einer Datenkommunikationsschnittstelle, bereitgestellt werden.

In einer Ausführungsform des Infrarot-Messsystems ist die Mehrzahl von Messpixeln Matrix-artig an der Oberfläche des Detektorarray-Substrats angeordnet. Die Anzahl von Messpixeln beträgt beispielsweise 80×80 Pixel, bevorzugt 360×240 Pixel, besonders bevorzugt 640×480 Pixel. Beliebige andere Werte sind denkbar. Die Anzahl von Messpixeln definiert die Auflösung des Infrarot-Messsystems, d.h. insbesondere die Auflösung eines mittels des Infrarot-Messsystems gemessenen Wärmebilds eines zu untersuchenden Gegenstands. Auf diese Weise kann eine besonders homogene und insbesondere lückenlose Erfassung von Infrarotstrahlung aus dem Raumwinkelbereich erfolgen, da das Infrarot-Detektorarray homogen und insbesondere lückenlos mit Messpixeln versehen ist.

Das Infrarot-Messsystem weist ein Verschlusselement auf, der dazu vorgesehen ist, zumindest vorübergehend einen Einfall von Infrarotstrahlung auf das Infrarot-Detektorarray zu unterbinden. Ein derartiger Verschlussmechanismus kann beispielsweise in Form eines Shutters realisiert sein. Bei geschlossenem Verschlussmechanismus ermittelte Temperaturmesswerte werden als Temperaturmesswerte $T_{MP}^{blind}$ der Messpixel bezeichnet. Die Temperaturmesswerte $T_{MP}^{blind}$ entsprechen dabei im Wesentlichen der Temperatur des Verschlussmechanismus. Die Bezeichnung "blind" kennzeichnet hier die Eigenschaft des Infrarot-Messsystems, keine Infrarotstrahlung zu detektieren, die außerhalb des Infrarot-Messsystems, beispielsweise von einem zu untersuchenden Gegenstand, emittiert wird. Der Verschlussmechanismus ist zu dessen Steuerung mit der Steuervorrichtung des Infrarot-Messsystems signaltechnisch verbunden.

Das beschriebene Infrarot-Messsystem dient als Grundlage für das im Folgenden beschriebene Verfahren zur kontaktfreien Ermittlung einer Temperatur einer Oberfläche, insbesondere zur kontaktfreien Ermittlung einer Temperaturverteilung einer Oberfläche.

Das Verfahren dient vorrangig der Korrektur einer Pixel-zugehörigen Temperatur-Driftkomponente $T_{drift}$, um die sich die aus den Messsignalen der jeweiligen Messpixel ermittelten Temperaturmesswerte $T_{MP}$ zeitabhängig verschieben ("driften"). Eine wesentliche Einflussgröße auf diese Verschiebung oder auch "Temperatur-Drift" ist die Alterung des Infrarot-Detektorarrays in Folge von Detektorarray-intrinsischen Effekten wie insbesondere Ladungsverschiebungen in den einzelnen Messpixeln. Die Temperatur-Drift der einzelnen Messpixel äußert sich insbesondere durch zeitlich veränderliche Abweichungen ("Offsets") der von den jeweiligen Messpixel ausgegebenen Messsignale und somit auch durch zeitliche Abweichungen der aus den Messsignalen der jeweiligen Messpixel bestimmten Temperaturmesswerte $T_{MP}$. Anschaulich gesprochen werden bei unveränderter Temperatur des Infrarot-Detektorarrays sowie bei unverändertem Einfall von Infrarotstrahlung zeitabhängig unterschiedliche Temperaturmesswerte $T_{MP}$ ermittelt. Diese zeitabhängige Verschiebung der Temperaturmesswerte führt zur Ausgabe eines sich kontinuierlich verfälschenden Untersuchungsergebnisses der zu ermittelnden Temperatur der Oberfläche.

Gegenwärtig werden derartige, unerwünschte Effekte durch den Einsatz von Verschlusselementen wie beispielsweise eines "Shutters" korrigiert. Dabei muss die Temperatur des Verschlusselements bekannt sein. Mit Kenntnis dieser Temperatur kann anschließend die Temperatur-Drift korrigiert werden.

Das erfindungsgemäße Verfahren zur kontaktfreien Ermittlung einer Temperatur einer Oberfläche, insbesondere zur kontaktfreien Ermittlung einer Temperaturverteilung einer Oberfläche, geht dabei aus von dem bereits vorgestellten Infrarot-Messsystem, das zumindest aufweist:

- ein Infrarot-Detektorarray mit einer Mehrzahl von Messpixeln, die jeweils ein Messsignal zur Ermittlung eines von einer Intensität der einfallenden Infrarotstrahlung abhängigen Temperaturmesswerts $T_{MP}$ bereitstellen, und

- einen Verschlussmechanismus zum Unterbinden eines Einfalls von Infrarotstrahlung auf das Infrarot-Detektorarray.

und wobei das Verfahren zumindest folgende Schritte umfasst:

- Bestimmen der Temperaturmesswerte $T_{MP}$ einer Mehrzahl von Messpixeln;
- Korrigieren von Temperaturmesswerten $T_{MP}$ um jeweils eine Pixel-zugehörige Temperatur-Driftkomponente $T_{drift}$.

Erfindungsgemäß

- wird zumindest zeitweise ein Einfall von Infrarotstrahlung auf das Infrarot-Detektorarray mittels des Verschlussmechanismus des Infrarot-Messsystems unterbunden, währenddessen Temperaturmesswerte $T_{MP}^{blind}$ ermittelt werden, und
- werden die Temperatur-Driftkomponenten $T_{drift}$ um die sich die Temperaturmesswerte $T_{mp}$ zeitabhängig

verschieben, unter Verwendung von

Temperaturmesswerten $T_{MP}^{blind}$ bestimmt, wobei zur Bestimmung der Temperatur-Driftkomponenten $T_{drift}$ ein Temperatur-Driftverhalten $M_{mp}$ der Messpixel aus Temperaturmesswerten $T_{mp}^{blind}$ bestimmt wird. Dabei wird zur Bestimmung der Temperatur-Driftkomponenten $T_{drift}$ das Temperatur-Driftverhalten $M_{mp}$ der Messpixel als Proportionalitätskonstante zwischen initialen Messabweichungen $T_{mp,offset}$ der Messpixel und Temperaturmesswerten $T_{mp}^{blind}$ bestimmt.

Die Auswertevorrichtung ist dazu vorgesehen, das erfindungsgemäße Verfahren zur kontaktfreien Ermittlung einer Temperatur einer Oberfläche, insbesondere zur kontaktfreien Ermittlung einer Temperaturverteilung einer Oberfläche, durchzuführen.

Unter "Bestimmen von Temperaturmesswerten $T_{MP}$ einer Mehrzahl von Messpixeln" ist insbesondere zu verstehen, dass zunächst von einer beliebigen Mehrzahl von Messpixeln Messsignale $U_{MP}$ (oder auch $U_{MP}$-$U_{RP}$) bereitgestellt und der Auswertevorrichtung weitergeleitet werden. Aus diesen bereitgestellten Messsignalen wertet die Auswertevorrichtung zu den entsprechenden Messpixeln zugehörige Temperaturmesswerte $T_{MP}$ aus. Genauer betrachtet wertet die Auswertevorrichtung natürlich zu entsprechenden Messpixeln i jeweils einen Pixel-abhängigen Temperaturmesswert $T_{MP}^{i}$ aus. "Pixel-abhängig" bedeutet dabei insbesondere, dass der jeweilige Temperaturmesswert (Index "i") einem bestimmten Messpixel (i) eindeutig zugeordnet ist. Im Folgenden werden allerdings sowohl die einzelnen Temperaturmesswerte - also die $T_{MP}^{i}$ - sowie analog dazu auch die zu einem bestimmten Messpixel k ermittelten Temperatur-Driftkomponenten $T_{drift}^{k}$ als jeweilige Mengen $T_{MP}$ sowie $T_{drift}$ zusammengefasst, um eine unnötige Verwirrung durch Indizes zu vermeiden.

Es sei darauf hingewiesen, dass die Mehrzahl von Messpixeln einer beliebigen Mehrzahl entsprechend kann, die nicht notwendigerweise der Gesamtheit der zur Verfügung stehenden Messpixel entsprechen muss. Daher kann die Menge der ausgewerteten Messpixel kleiner sein als die Menge der insgesamt auf dem Infrarot-Detektorarray verfügbaren Messpixel.

Die einzelnen Temperaturmesswerte $T_{MP}$ können in einer Ausführungsform des Verfahrens als die Temperatur der zu untersuchenden Oberfläche kennzeichnende Werte, beispielsweise in Grad Celsius (°C) oder Kelvin (K) oder dergleichen, realisiert sein.

Unter "Bestimmung der Temperatur-Driftkomponenten $T_{drift}$ unter Verwendung von Temperaturmesswerten $T_{MP}^{blind}$" ist zu verstehen, dass zur Auswertung der jeweiligen, Pixel-abhängigen Temperatur-Driftkomponenten $T_{drift}$ für die Messpixel die Temperaturmesswerte $T_{MP}^{blind}$ genutzt werden. Die Temperaturmesswerte $T_{MP}^{blind}$ bezeichnen diejenigen Temperaturmesswerte $T_{MP}$, die von den Messpixeln ermittelt werden, wenn der Einfall von Infrarotstrahlung auf das Infrarot-Detektorarray durch den Verschlussmechanismus unterbunden ist. Die bei geschlossenem Verschlussmechanismus ermittelten Temperaturmesswerte $T_{MP}^{blind}$ der Messpixel entsprechen dabei der Temperatur des Verschlussmechanismus. Die Bezeichnung "blind" kennzeichnet hier die Eigenschaft des Infrarot-Messsystems, keine Infrarotstrahlung zu detektieren, die außerhalb des Infrarot-Messsystems, beispielsweise von einem zu untersuchenden Gegenstand, emittiert wird.

Das "Korrigieren von Temperaturmesswerten $T_{MP}$ um jeweils eine Pixel-zugehörige Temperatur-Driftkomponente $T_{drift}$" bezeichnet eine Korrektur, die für jedes Messpixel der Mehrzahl von Messpixeln angewandt wird oder angewandt werden kann, für das Temperaturmesswerte $T_{MP}$ bestimmt wurden. Dies kann in einer Ausführungsform des Verfahrens insbesondere dadurch erfolgen, dass auf einen zu einem jeweiligen Messpixel ermittelten Temperaturmesswert $T_{MP}$ eine für dieses Messpixel ermittelte zugehörige Temperatur-Driftkomponente $T_{drift}$ addiert oder subtrahiert wird, d.h.

$$T_{MP}^{corr} = T_{MP} + T_{drift}.$$

Erfindungsgemäß kann auf diese Weise eine von einer einfallenden Infrarotstrahlung unabhängige Temperatur-Messgröße $T_{MP}^{blind}$ zur Korrektur der Temperatur-Drift genutzt werden. Somit kann ein Auswerteergebnis des Infrarot-Messsystems, insbesondere die mittels erfindungsgemäßem Verfahren zu ermittelnde Temperatur einer Oberfläche, hinsichtlich einer Genauigkeit verbessert werden kann.

In einer Ausführungsform des erfindungsgemäßen Verfahrens werden die Temperatur-Driftkomponenten $T_{drift}$ in zeitlichen Abständen wiederholt, insbesondere regelmäßig, bevorzugt kontinuierlich oder quasi-kontinuierlich, bestimmt.

Durch die in zeitlichen Abständen wiederholte Bestimmung der Temperatur-Driftkomponenten $T_{drift}$ kann realisiert werden, dass eine ebenfalls wiederholte Korrektur der einem Benutzer des Infrarot-Messsystems ausgegebenen Temperatur, insbesondere eines Wärmebilds, um die Temperatur-Driftkomponenten $T_{drift}$ erfolgt. Vorteilhaft ist Auswertevorrichtung dazu vorgesehen, durch eine hohe Verarbeitungsrate der Temperaturmesswerte eine regelmäßige, insbesondere eine kontinuierliche oder quasi-kontinuierliche, Bestimmung der Temperatur-Driftkomponenten $T_{drift}$, und somit eine regelmäßige, insbesondere eine kontinuierliche oder quasi-kontinuierliche, Korrektur der Ermittelten Temperatur, insbesondere des Wärmebilds, zu ermöglichen. Unter "quasi-kontinuierlich" ist insbesondere zu verstehen, dass die sich wiederholende Korrektur eine geräteinterne Verarbeitungsdauer durch die Auswertevorrichtung bis zur fertigen Korrektur der Temperaturmesswerte $T_{MP}$ von weniger als 10 Sekunden, bevorzugt von weniger als 5 Sekunde, besonders bevorzugt von weniger als 1 Sekunde aufweist. Auf diese Weise wird bei einem Benutzer des Infrarot-Messsystems der Eindruck erweckt, dass die für die untersuchte Oberfläche ermittelte Temperatur, insbesondere das Wärmebild, unmittelbar, bevorzugt in Echtzeit und kontinuierlich, korrigiert wird.

Nach dem erfindungsgemäßen Verfahren wird zur Bestimmung der Temperatur-Driftkomponenten $T_{drift}$ ein Temperatur-Driftverhalten $m_{MP}$ der Messpixel aus Temperaturmesswerten $T_{MP}{}^{blind}$ bestimmt. Das Temperatur-Driftverhalten $m_{MP}$ der Messpixel stellt vorteilhaft ein geeignetes Maß für die Temperatur-Drift der Messpixel dar. Insbesondere kann das Temperatur-Driftverhalten $m_{MP}$ als ein mathematischer Ausdruck wie beispielsweise eine Funktion oder eine Konstante oder dergleichen repräsentiert sein. Vorteilhaft lässt sich auf diese Weise das Temperatur-Driftverhalten $m_{MP}$ der Messpixel als Grundlage für die Bestimmung der Temperatur-Driftkomponenten $T_{drift}$ heranziehen.

Nach dem erfindungsgemäßen Verfahren wird zur Bestimmung der Temperatur-Driftkomponenten $T_{drift}$ das Temperatur-Driftverhalten $m_{MP}$ der Messpixel als Proportionalitätskonstante zwischen initialen Messabweichungen $T_{MP,offset}$ der Messpixel und Temperaturmesswerten $T_{MP}{}^{blind}$ bestimmt.

Unter der "initialen Messabweichung $T_{MP,offset}$ der Messpixel" ist insbesondere diejenige, Pixel-abhängige Messabweichung ("Offset") der Messpixel zu verstehen, die bei einer Werkskalibrierung des Infrarot-Messsystems ermittelt wird. Insbesondere verfügt die Auswertevorrichtung des Infrarot-Messsystems über die initialen Messabweichungen $T_{MP,offset}$ für jedes Messpixel des Infrarot-Detektorarrays. Vorteilhaft können diese aus einem Speicher der Auswertevorrichtung oder des Infrarot-Messsystems für jedes Messpixel des Infrarot-Detektorarrays abrufbar sein, wobei eine eindeutige Zuordnung von initialen Messabweichungen $T_{MP,offset}$ zu den Messpixel gewährleistet ist. In einer Ausführungsform des Infrarot-Messsystems ist die Zuordnung der initialen Messabweichungen $T_{MP,offset}$ zu den Messpixeln in einer Tabelle als "initialen Offset-Karte" gespeichert.

Das Temperatur-Driftverhalten $m_{MP}$ der Messpixel wird in dem vorgeschlagenen Verfahren als Proportionalitätskonstante zwischen diesen initialen Messabweichungen $T_{MP,offset}$ der Messpixel sowie der ermittelten Temperaturmesswerte $T_{MP}{}^{blind}$ bestimmt. Dazu werden zunächst durch die Zuordnung von initialen Messabweichungen $T_{MP,offset}$ zu den jeweiligen Messpixeln Wertepaare ($T_{MP}{}^{blind}$, $T_{MP,offset}$) für jedes auszuwertende Messpixel gebildet.

Bei Auftragung der ermittelten Temperaturmesswerte $T_{MP}{}^{blind}$ auf der Ordinatenachse gegen die initialen Messabweichungen $T_{MP,offset}$ auf der Abszissenachse ergibt sich eine Datenmenge ("Punktwolke"), die sich bevorzugt durch eine Gerade modellieren ("anfitten") lässt, beispielsweise unter Verwendung eines Least-Square-Fits oder dergleichen. Anschließend kann das Temperatur-Driftverhalten $m_{MP}$ der Messpixel besonders einfach und besonders genau aus der Geradensteigung (Proportionalitätskonstante) dieser Gerade ermittelt werden. Insbesondere gilt für diese Gerade die allgemeine Gleichung

$$T_{MP}{}^{blind} = m_{MP} \cdot (T_{MP,offset}{}^{0} - T_{MP,offset})$$

mit einem Abszissenachsenabschnitt $T_{MP,offset}{}^{0}$. Es sei darauf hingewiesen, dass das Bild der Steigungsbestimmung der Veranschaulichung dient. Insbesondere kann das Temperatur-Driftverhalten $m_{MP}$ der Messpixel als Proportionalitätskonstante auch mittels mathematischer Verfahren wie beispielsweise einer Ausgleichsrechnung oder einer linearen Regressionsrechnung berechnet werden.

Dem Verfahren liegt die Erkenntnis zu Grunde, dass sich das Temperatur-Driftverhalten $m_{MP}$ der Messpixel besonders vorteilhaft als von der initialen Messabweichung $T_{MP,offset}$ des jeweiligen Messpixels, also als von dem initialen Offset des jeweiligen Messpixels, abhängiges Maß bestimmen lässt. Dies bedeutet, dass diejenigen Messpixel, die zur Zeit der Werkskalibrierung bereits eine verhältnismäßig große initiale Messabweichung $T_{MP,offset}$ (einen "Offset") aufweisen, einer stärkeren Temperatur-Drift unterliegen als Messpixel, die zur Zeit der Werkskalibrierung lediglich eine (betragsmäßig) kleine initiale Messabweichung $T_{MP,offset}$ aufweisen.

Vorteilhaft kann auf diese Weise eine besonders einfache und schnell durchführbare Bestimmung des Temperatur-Driftverhaltens $m_{MP}$ der Messpixel realisiert werden. Unter Verwendung dieses Bestimmungsverfahrens kann ferner eine Anforderung an die Auswertevorrichtung hinsichtlich ihrer Rechenleistung besonders gering gehalten werden und somit Kosten eingespart werden.

In einer Ausführungsform des erfindungsgemäßen Verfahrens wird zur Bestimmung der Temperatur-Driftkomponenten $T_{drift}$ das Temperatur-Driftverhalten $m_{MP}$ der Messpixel als Proportionalitätskonstante zwischen Empfindlichkeiten der initialen Messabweichungen $\partial T_{MP,offset}$ gegenüber Alterungseinflüssen der Messpixel und Temperaturmesswerten $T_{MP}{}^{blind}$ bestimmt.

Der Ausdruck "Empfindlichkeiten der initialen Messabweichungen $\partial T_{MP,offset}$ gegenüber Alterungseinflüssen der Messpixel" (im Folgenden kürzer "Empfindlichkeiten der initialen Messabweichungen $\partial T_{MP,offset}$") beschreibt insbesondere ein Maß für die Veränderlichkeit der initialen Messabweichung $T_{MP,offset}$ der Messpixel auf Grund eines äußeren physikalischen Einflusses, der eine künstlich beschleunigte Alterung der Messpixel bewirkt ("die Änderungsanfälligkeit der Offsetwerte unter Alterungseinfluss"). Anders ausgedrückt bezeichnet die "Empfindlichkeit der initialen Messabweichungen $\partial T_{MP,offset}$" eine Anfälligkeit eines Messpixel, auf einen äußeren physikalischen Einflusses mit einer Änderung der initialen Messabweichung $T_{MP,offset}$ (d.h. des Offsets) zu reagieren. Beispielsweise kann ein derartiger äußerer physikalischer Einfluss durch eine Hochtemperaturlagerung, eine hohe Bestromung des Infrarot-Detektorarrays oder dergleichen ausgeübt werden.

Unter "Empfindlichkeiten der initialen Messabweichungen $\partial T_{MP,offset}$ gegenüber Alterungseinflüssen der Messpixel" sind insbesondere diejenigen, Pixel-abhängigen Empfindlichkeiten der initialen Messabweichungen $\partial T_{MP,offset}$ gegenüber Alterungseinflüssen der Messpixel zu verstehen, die bei einer Werkskalibrierung des Infrarot-Messsystems ermittelt werden. Insbesondere verfügt die Auswertevorrichtung des Infrarot-Messsystems über die Empfindlichkeiten der initialen Messabweichungen $\partial T_{MP,offset}$ für jedes Messpixel des Infrarot-Detektorarrays. Vorteilhaft können diese aus einem Speicher der Auswertevorrichtung oder des Infrarot-Messsystems für jedes Messpixel des Infrarot-Detektorarrays abrufbar sein, wobei eine eindeutige Zuordnung von Empfindlichkeiten der initialen Messabweichungen $\partial T_{MP,offset}$ zu den Messpixeln gewährleistet ist. In einer Ausführungsform des Infrarot-Messsystems ist die Zuordnung der Empfindlichkeiten der initialen Messabweichungen $\partial T_{MP,offset}$ zu den Messpixeln in einer Tabelle als "initiale Driftanfälligkeit-Karte" gespeichert.

Das Temperatur-Driftverhalten $m_{MP}$ der Messpixel wird in dem vorgeschlagenen Verfahren als Proportionalitätskonstante zwischen diesen Empfindlichkeiten der initialen Messabweichungen $\partial T_{MP,offset}$ der Messpixel sowie der ermittelten Temperaturmesswerte $T_{MP}^{blind}$ bestimmt. Dazu werden zunächst durch die Zuordnung von Empfindlichkeiten der initialen Messabweichungen $\partial T_{MP,offset}$ zu den jeweiligen Messpixeln Wertepaare ($T_{MP}^{blind}$, $\partial T_{MP,offset}$) für jedes auszuwertende Messpixel gebildet. Bei Auftragung der ermittelten Temperaturmesswerte $T_{MP}^{blind}$ auf der Ordinatenachse gegen die Empfindlichkeiten der initialen Messabweichungen $\partial T_{MP,offset}$ auf der Abszissenachse ergibt sich eine Datenmenge ("Punktwolke"), die sich bevorzugt durch eine Gerade modellieren ("anfitten") lässt, beispielsweise unter Verwendung eines Least-Square-Fits oder dergleichen. Anschließend kann das Temperatur-Driftverhalten $m_{MP}$ der Messpixel besonders einfach und besonders genau aus der Geradensteigung (Proportionalitätskonstante) dieser Geraden ermittelt werden. Insbesondere gilt für diese Gerade die allgemeine Gleichung

$$T_{MP}^{blind} = m_{MP} \cdot (\partial T_{MP,offset}^{0} - \partial T_{MP,offset})$$

mit einem Abszissenachsenabschnitt $\partial T_{MP,offset}^{0}$. Es sei darauf hingewiesen, dass auch hier das Bild der Steigungsbestimmung unter anderem der Veranschaulichung dient. Insbesondere kann das Temperatur-Driftverhalten $m_{MP}$ der Messpixel als Proportionalitätskonstante auch mittels mathematischer Verfahren wie beispielsweise einer Ausgleichsrechnung oder einer linearen Regressionsrechnung berechnet werden.

Dem Verfahren liegt die Erkenntnis zu Grunde, dass sich das Temperatur-Driftverhalten $m_{MP}$ der Messpixel besonders vorteilhaft als von der Empfindlichkeit der initialen Messabweichungen $\partial T_{MP,offset}$ des jeweiligen Messpixels abhängiges Maß bestimmen lässt. Dies bedeutet, dass diejenigen Messpixel, die zur Zeit der Werkskalibrierung bereits Anzeichen für eine stärkere Empfindlichkeit ihrer initialen Messabweichung gegenüber Alterungseinflüssen zeigen, einer stärkeren Temperatur-Drift unterliegen als Messpixel, die zur Zeit der Werkskalibrierung kaum Anzeichen für eine derartige Empfindlichkeit aufweisen.

Vorteilhaft kann auf diese Weise eine besonders einfache und schnell durchführbare Bestimmung des Temperatur-Driftverhaltens $m_{MP}$ der Messpixel realisiert werden. Unter Verwendung dieses Bestimmungsverfahrens kann ferner eine Anforderung an die Auswertevorrichtung hinsichtlich ihrer Rechenleistung besonders gering gehalten werden und somit Kosten eingespart werden.

In einer Ausführungsform des erfindungsgemäßen Verfahrens werden die Temperatur-Driftkomponenten $T_{drift}$ aus dem Temperatur-Driftverhalten $m_{MP}$ von Messpixeln bestimmt.

Das Temperatur-Driftverhalten $m_{MP}$ der Messpixel kann vorteilhaft zur Bestimmung der Temperatur-Driftkomponenten $T_{drift}$ der Messpixel genutzt werden, da es als ein Maß für die Temperatur-Drift angesehen werden kann. Wie vorgeschlagen kann das Temperatur-Driftverhalten $m_{MP}$ der Messpixel unter Verwendung eines Verschlussmechanismus bestimmt werden.

In einer Ausführungsform des erfindungsgemäßen Verfahrens werden die Temperatur-Driftkomponenten $T_{drift}$ aus dem Temperatur-Driftverhalten $m_{MP}$ der Messpixel bestimmt, indem die Temperatur-Driftkomponenten $T_{drift}$ der jeweiligen Messpixel in Form einer Funktion als Produkt von Temperatur-Driftverhalten $m_{MP}$ und initialen Messabweichungen $T_{MP,offset}$ der jeweiligen Messpixel berechnet werden.

Diese Ausführungsform des Verfahrens ergibt sich in Analogie zur Bestimmung des Temperatur-Driftverhaltens $m_{MP}$ der Messpixel als Proportionalitätskonstante zwischen initialen Messabweichungen $T_{MP,offset}$ der Messpixel und Temperaturmesswerten $T_{MP}^{blind}$ zur Bestimmung der Temperatur-Driftkomponenten $T_{drift}$ werden zunächst zu jedem auszuwertenden Messpixel die zugehörigen initialen Messabweichungen $T_{MP,offset}$ aus der initialen Offset-Karte bestimmt. Es sei angemerkt, dass sich die zur Bestimmung der Temperatur-Driftkomponente $T_{drift}$ auszuwertenden Messpixel prinzipiell von den Messpixeln unterscheiden können, die zur Bestimmung des Temperatur-Driftverhaltens $m_{MP}$ verwendet werden.

Anschließend kann eine zu einem Messpixel gehörende Temperatur-Driftkomponente $T_{drift}$ als Produkt aus dem Temperatur-Driftverhalten $m_{MP}$ und der zu dem entsprechenden Messpixel gehörenden initialen Messabweichung $T_{MP,offset}$ berechnet werden

$$T_{drift} = m_{MP} \cdot (T_{MP,offset}^{0} - T_{MP,offset}).$$

Diese Gleichung stellt ebenfalls eine Geradengleichung dar, mit dem konstanten Parameter $T_{MP,offset}^{0}$. $T_{MP,offset}^{0}$ kann dabei insbesondere auch Null sein.

Vorteilhaft kann auf diese Weise eine besonders einfache und schnell durchführbare Bestimmung der Temperatur-Driftkomponenten $T_{drift}$ der Messpixel realisiert werden. Insbesondere braucht die Temperatur des Verschlussmechanismus nicht bekannt zu sein. Unter Verwendung dieses Bestimmungsverfahrens kann ferner eine Anforderung an die Auswertevorrichtung hinsichtlich ihrer Rechenleistung besonders gering gehalten und somit Kosten eingespart werden.

In einer Ausführungsform des erfindungsgemäßen Verfahrens werden die Temperatur-Driftkomponenten $T_{dift}$ aus dem Temperatur-Driftverhalten $m_{MP}$ der Messpixel bestimmt, indem die Temperatur-Driftkomponenten $T_{drift}$ der jeweiligen Messpixel in Form einer Funktion als Produkt von Temperatur-Driftverhalten $m_{MP}$ und Empfindlichkeiten der initialen Messabweichungen $\partial T_{MP,offset}$ gegenüber Alterungseinflüssen der jeweiligen Messpixel berechnet werden.

Diese Ausführungsform des Verfahrens ergibt sich in Analogie zur Bestimmung des Temperatur-Driftverhaltens $m_{MP}$ der Messpixel als Proportionalitätskonstante zwischen Empfindlichkeiten der initialen Messabweichungen $\partial T_{MP,offset}$ der Messpixel und Temperaturmesswerten $T_{MP}^{blind}$.

Zur Bestimmung der Temperatur-Driftkomponenten $T_{drift}$ werden zunächst zu jedem auszuwertenden Messpixel die zugehörigen Empfindlichkeiten der initialen Messabweichungen $\partial T_{MP,offset}$ aus der initialen Driftanfälligkeit-Karte bestimmt. Anschließend kann eine zu einem Messpixel gehörende Temperatur-Driftkomponente $T_{drift}$ als Produkt aus dem Temperatur-Driftverhalten $m_{MP}$ und der zu dem entsprechenden Messpixel gehörenden Empfindlichkeiten der initialen Messabweichungen $\partial T_{MP,offset}$ berechnet werden

$$T_{drift} = m_{MP} \cdot (\partial T_{MP,offset}^{0} - \partial T_{MP,offset}).$$

Diese Gleichung stellt ebenfalls eine Geradengleichung dar, mit dem konstanten Parameter $\partial T_{MP,offset}^{0}$. $\partial T_{MP,offset}^{0}$ kann dabei insbesondere auch Null sein.

Vorteilhaft kann auf diese Weise eine besonders einfache und schnell durchführbare Bestimmung der Temperatur-Driftkomponenten $T_{drift}$ der Messpixel realisiert werden. Insbesondere braucht die Temperatur des Verschlussmechanismus nicht bekannt zu sein. Unter Verwendung dieses Bestimmungsverfahrens kann ferner eine Anforderung an die Auswertevorrichtung hinsichtlich ihrer Rechenleistung besonders gering gehalten und somit Kosten eingespart werden.

In einer Ausführungsform des erfindungsgemäßen Verfahrens wird in einem weiteren Verfahrensschritt ein Einfall von Infrarotstrahlung auf das Infrarot-Detektorarray mittels des Verschlussmechanismus des Infrarot-Messsystems unterbunden und die Temperaturmesswerte $T_{MP}$ werden jeweils um eine Pixel-abhängige Abweichung $\Delta T_{MP}^{blind}$ von einem Mittelwert $<T_{MP}^{blind}>$ aller bei unterbundenem Einfall von Infrarotstrahlung gemessenen Temperaturmesswerten $T_{MP}^{blind}$ korrigiert.

Da die Temperatur-Drift im nicht idealen Anwendungsfall für jedes Messpixel individuell jeweils geringfügig unterschiedlich sein kann, kann auf diese Weise vorteilhaft eine weitere Korrektur, insbesondere eine Homogenisierung bzw. eine Verringerung der Varianz, der Temperaturmesswerte $T_{MP}$ erfolgen. Insbesondere kann diese Korrektur für die nach erfindungsgemäßem Verfahren bereits um die Temperatur-Driftkomponente $T_{drift}$ korrigierten Temperaturmesswerte $T_{MP}$ erfolgen.

Dazu wird in einem weiteren Verfahrensschritt zumindest zeitweise ein Einfall von Infrarotstrahlung auf das Infrarot-Detektorarray mittels des Verschlussmechanismus des Infrarot-Messsystems, insbesondere mittels eines Shutters, unterbunden. Die daraufhin ermittelten Temperaturmesswerte $T_{MP}^{blind}$ der Messpixel werden um einen Temperaturwert, der der Temperatur des Verschlussmechanismus entspricht, schwanken. Ein aus allen bei unterbundenem Einfall von Infrarotstrahlung gemessenen Temperaturmesswerte $T_{MP}^{blind}$ gebildeter Mittelwert $<T_{MP}^{blind}>$ wird dieser Temperatur des Verschlussmechanismus sehr nahekommen. Die Berechnung einer Pixel-abhängigen Abweichung $\Delta T_{MP}^{blind}$ von dem Mittelwert $<T_{MP}^{blind}>$ für alle Messpixel erlaubt, Temperaturmesswerte $T_{MP}$ eines jeden Messpixels um genau diese Abweichung $\Delta T_{MP}^{blind}$ zu korrigieren und somit die von der Gesamtheit aller Messpixel ausgegebenen Temperaturmesswerte $T_{MP}$ zu homogenisieren.

Dieser weitere Verfahrensschritt der Homogenisierung kann im Anschluss an die Korrektur der Temperaturmesswerte $T_{MP}$ der Messpixel um die Temperatur-Driftkomponente $T_{drift}$ erfolgen. Alternativ oder zusätzlich kann die Homogenisierung auch zu einem beliebigen anderen Zeitpunkt erfolgen, beispielsweise vor der Berechnung der Temperatur-Driftkomponente $T_{drift}$.

Zeichnungen

Die Erfindung ist anhand von in den Zeichnungen dargestellten Ausführungsbeispielen in der nachfolgenden Beschreibung näher erläutert. Die Zeichnung, die Beschreibung und die Ansprüche enthalten zahlreicher Merkmale in Kombination. Der Fachmann wird die Merkmale zweckmäßigerweise auch einzeln betrachten und zu sinnvollen weiteren Kombinationen zusammenfassen. Gleiche Bezugszeichen in den Figuren bezeichnen gleiche Elemente.

Es zeigen:

Figur 1    eine Ausführungsform eines erfindungsgemäßen Infrarot-Messsystems in einer perspektivischen Frontansicht,

Figur 2    eine Ausführungsform eines erfindungsgemäßen Infrarot-Messsystems in einer perspektivischen Rückansicht,

Figur 3       eine perspektivische, schematische Rückansicht des erfindungsgemäßen Infrarot-Messsystems vor einem zu vermessenden Gegenstand,

Figur 4       eine schematische Darstellung der zur Ausführung des erfindungsgemäßen Verfahrens erforderlichen Komponenten des erfindungsmäßen Infrarot-Messsystems,

Figur 5       eine schematische Aufsicht auf eine Ausführungsform des erfindungsgemäßen Infrarot-Detektorarrays,

Figur 6       eine Ausführungsform des erfindungsgemäßen Verfahrens in einem Verfahrensdiagramm,

Figur 7a       eine "initiale Offset-Karte", die initiale Messabweichungen $T_{MP,offset}$ zu Messpixeln des Infrarot-Detektorarrays zuordnet,

Figur 7b       eine "initiale Driftanfälligkeit-Karte", die Empfindlichkeiten der initialen Messabweichungen $\partial T_{MP,offset}$ zu den Messpixeln des Infrarot-Detektorarrays zuordnet,

Figur 8       eine schematische Darstellung der erfindungsgemäßen Auswerte-Verfahrensschritte bei Nutzung der initialen Messabweichungen $T_{MP,offset}$ zur Bestimmung der Temperatur-Driftkomponenten $T_{drift}$,

Figur 9       eine schematische Darstellung der erfindungsgemäßen Auswerte-Verfahrensschritte bei Nutzung der initialen Driftanfälligkeiten $\partial T_{MP,offset}$ zur Bestimmung der Temperatur-Driftkomponente $T_{drift}$,

Figur 10a,b       eine schematische Darstellung der erfindungsgemäßen Auswerte-Verfahrensschritte zur Homogenisierung der Temperaturmesswerte $T_{MP}$ (a) vor Homogenisierung und (b) nach Homogenisierung der Temperaturmesswerte $T_{MP}$.

Beschreibung der Ausführungsbeispiele

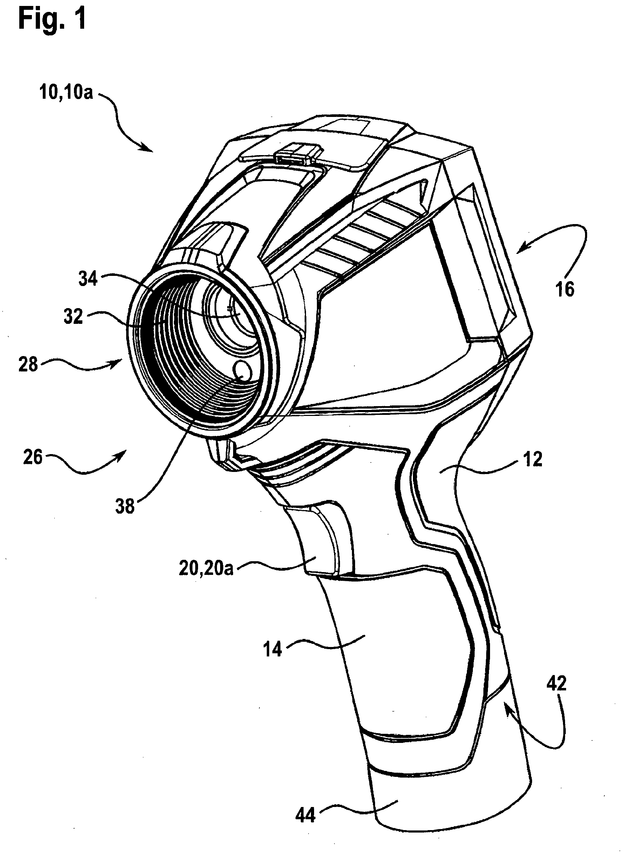

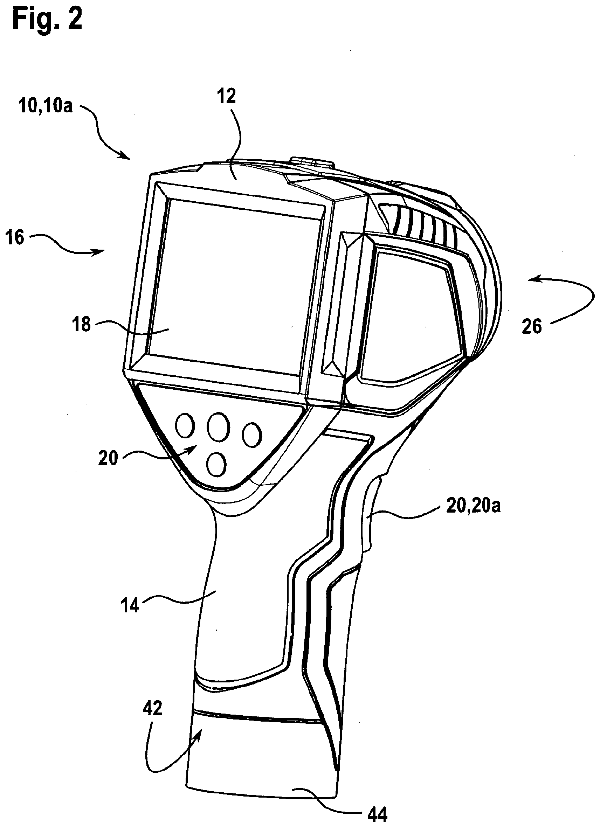

Im Folgenden wird ein erfindungsgemäßes Infrarot-Messsystem 10 in Form einer handgehaltenen Wärmebildkamera 10a vorgestellt. Figur 1 und Figur 2 zeigen eine beispielhafte Ausführungsform dieser Wärmebildkamera 10a in perspektivischer Frontansicht bzw. in einer perspektivischen Rückansicht. Die Wärmebildkamera 10a umfasst ein Gehäuse 12 mit einem Griff 14. Mit dem Griff 14 kann die Wärmebildkamera 10a während ihrer Benutzung bequem in einer Hand gehalten werden. Das Gehäuse 12 der Wärmebildkamera 10a weist weiterhin auf einer einem Benutzer während der Benutzung der Wärmebildkamera 10a zugewandten Seite 16 eine Ausgabevorrichtung in Form eines berührungssensitiven Displays 18 sowie Bedienelemente 20 zur Benutzereingabe und Steuerung der Wärmebildkamera 10a auf. Insbesondere weist die Wärmebildkamera 10a einen Trigger 20a auf, mit dem ein Benutzer eine kontaktfreie Ermittlung einer Temperatur einer zu untersuchenden Oberfläche 22 eines Gegenstands 24, insbesondere eine Temperaturverteilung einer Oberfläche 22 eines Gegenstands 24, auslösen kann.

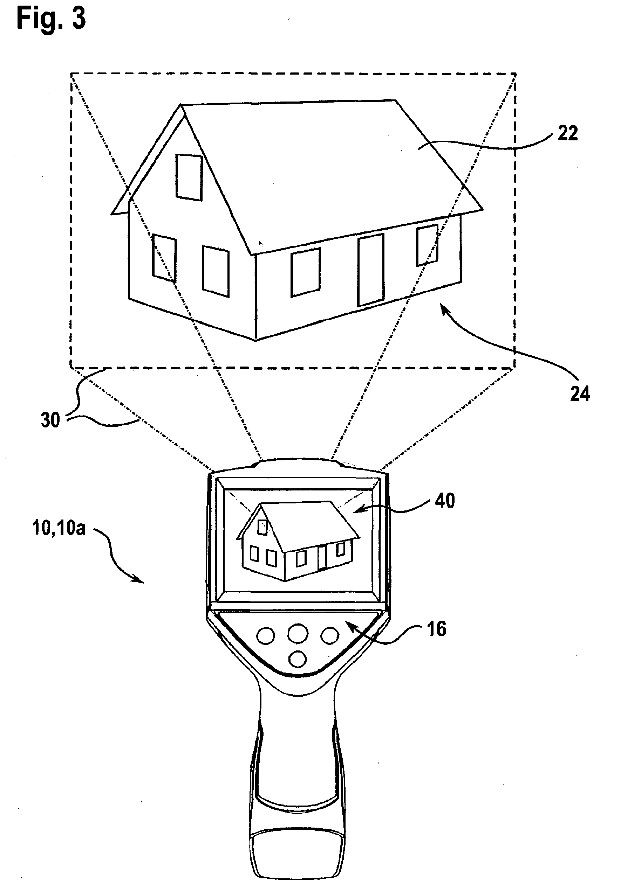

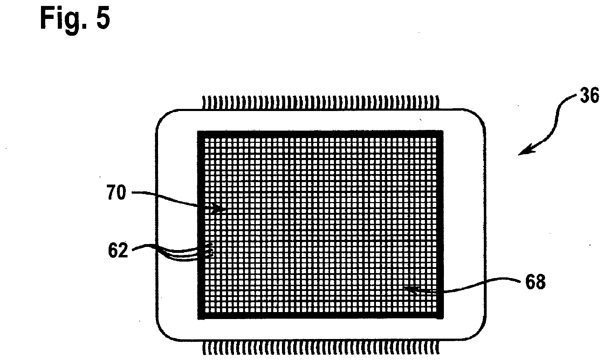

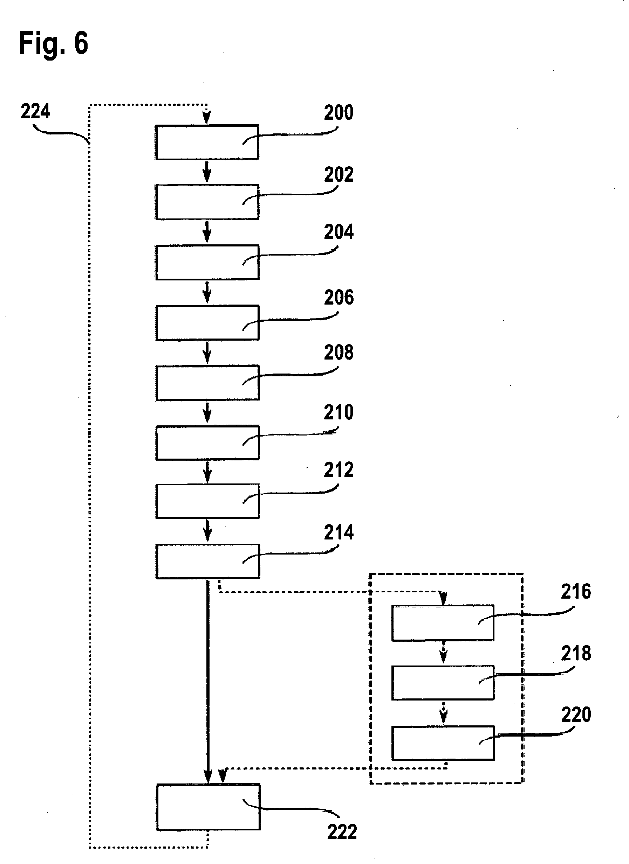

Auf der einem Benutzer abgewandten Seite 26 des Gehäuses 12 ist eine Eintrittsöffnung 28 in dem Gehäuse 12 vorgesehen, durch die von dem Gegenstand 24 ausgestrahlte, insbesondere in einem Messbereich 30 (vergleiche Figur 3 gestrichelter Raumwinkel) von einer Oberfläche 22 des Gegenstands 24 ausgestrahlte, Wärmestrahlung in die Wärmebildkamera 10a eintreten kann. Unmittelbar hinter der Eintrittsöffnung 28 befindet sich in einem Streulicht mindernden Lichttubus 36 ein Linsensystem 34 als Optik. Das Linsensystem 34 ist für Strahlung im mittleren Infrarotbereich durchlässig und dient der Fokussierung von Wärmestrahlung auf ein Infrarot-Detektorarray 36 (vgl. insbesondere Erläuterungen zu Figur 5 und Figur 6) der Wärmebildkamera 10a.

Auf der einem Benutzer während der Benutzung der Wärmebildkamera 10a abgewandten Seite 26 des Gehäuses 12 ist in einem Ausführungsbeispiel der Wärmebildkamera 10a ferner eine im visuellen Spektrum arbeitende Kamera 38 vorgesehen, mittels der ein visuelles Bild des Messbereichs 30 aufgenommen wird. Dieses visuelle Bild kann gemeinsam mit einem aus einer von dem Benutzer initiierten Temperaturmessung generierten Wärmebild 40 ausgegeben werden, insbesondere zumindest teilweise mit dem Wärmebild 40 überlagert oder überblendet ausgegeben werden. Die Kamera 38 kann beispielsweise als ein CCD-Bildsensor realisiert sein.

Auf der Unterseite der Wärmebildkamera 10a weist der Griff 14 eine Aufnahme 42 zur Aufnahme eines Energiespeichers 44 auf, der beispielhaft in Form eines aufladbaren Akkumulators oder in Form von Batterien ausgeführt sein kann.

Die Wärmebildkamera 10a dient dazu, ein Wärmebild 40 eines zu untersuchenden Gegenstands 24 aufzunehmen, wie dies in Figur 3 schematisch dargestellt ist. Nach Einschalten der Wärmebildkamera 10a detektiert die Wärmebildkamera 10a in dem Messbereich 30 von der Oberfläche 22 des Gegenstands 24 abgestrahlte Wärmestrahlung berührungslos. Die von der Wärmebildkamera 10a ermittelte Temperatur charakterisiert die Temperatur der Oberfläche 22 und ist in diesem Ausführungsbeispiel als eine Temperaturverteilung zu verstehen, die bevorzugt in Form eines ortsaufgelösten Wärmebilds 40 an den Benutzer der Wärmebildkamera 10a ausgegeben wird. In Folge der Betätigung des Triggers 20a durch den Benutzer der Wärmebildkamera 10a wird in diesem Ausführungsbeispiel ein um eine Temperatur-Driftkomponente $T_{drift}$ 46 korrigiertes Wärmebild 40 erzeugt, auf dem Display 18 ausgegeben und gespeichert.

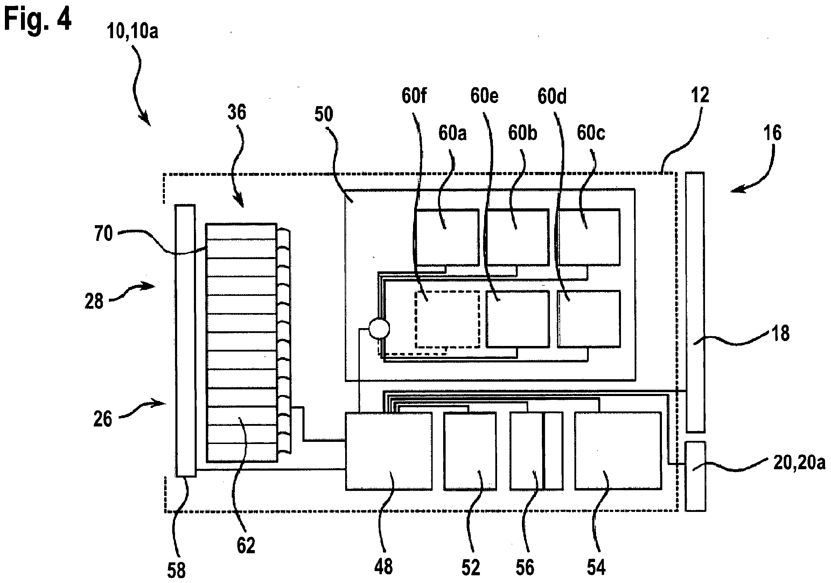

In Figur 4 sind die zur Ausführung des erfindungsgemäßen Verfahrens (vgl. insbesondere Figur 6) erforderlichen Komponenten der erfindungsmäßen Wärmebildkamera 10a schematisch dargestellt. Diese Komponenten sind innerhalb des Gehäuses 12 der Wärmebildkamera 10a als elektrische Bauteile untergebracht und miteinander verschaltet. Die Komponenten umfassen im Wesentlichen das Infrarot-Detektorarray 36, eine Steuervorrichtung 48, eine Auswertevorrichtung 50, eine Datenkommunikationsschnittstelle 52, eine Energieversorgungsvorrichtung 54, einen Datenspeicher 56 sowie einen Verschlussmechanismus 58.

Das Infrarot-Detektorarray 36 der Wärmebildkamera 10a weist zumindest eine Mehrzahl von Messpixeln 62 auf, die dazu vorgesehen sind, Wärmestrahlung aus dem infraroten Strahlungsspektrum, die in dem Messbereich 30 ausgehend von der zu untersuchenden Oberfläche 22 des Gegenstands 24 in die Eintrittsöffnung 28 der Wärmebildkamera 10a eintritt (vgl. Figur 3), zu erfassen. Die in die Eintrittsöffnung 28 eintretende Wärmestrahlung wird mittels des Linsensystems 34 auf das Infrarot-Detektorarray 36 unter Beleuchtung zumindest einer Mehrzahl von Messpixeln 62 fokussiert (hier nicht näher dargestellt).

Jedes Messpixel 62 ist dazu vorgesehen, ein elektrisches Messsignal $U_{MP}$, beispielsweise ein Potential, an seinem Ausgang bereitzustellen, dass mit der eingestrahlten Wärmeleistung der Infrarotstrahlung $P_{MP}$ auf das Messpixel 62 korreliert. Diese Pixel-abhängigen Messsignale $U_{MP}$ werden einzeln oder in Kombination mit anderen Messsignalen anderer Messpixel 62 zunächst an die Steuervorrichtung 48 des Infrarot-Messsystems ausgegeben und von dieser an die Auswertevorrichtung 50 des Infrarot-Messsystems 10 weitergeleitet.

Die Steuervorrichtung 48 des Infrarot-Messsystems 10 stellt insbesondere eine Vorrichtung dar, die zumindest eine Steuerelektronik sowie Mittel zur Kommunikation mit den anderen Komponenten der Wärmebildkamera 10a umfasst, insbesondere Mittel zur Steuerung und Regelung der Wärmebildkamera 10a. Die Steuervorrichtung 48 ist dazu vorgesehen, die Wärmebildkamera 10a zu steuern und deren Betrieb zu ermöglichen. Dazu ist die Steuervorrichtung 48 mit den anderen Komponenten des Messgeräts, insbesondere dem Infrarot-Detektorarray 36 (über eine Schaltung), der Auswertevorrichtung 50, der Datenkommunikationsschnittstelle 52, der Energieversorgungsvorrichtung 54, dem Datenspeicher 56, dem Verschlussmechanismus 58, aber auch den Bedienelementen 20,20a und dem berührungssensitiven Display 18 signaltechnisch verbunden.

Die Energieversorgungsvorrichtung 54 in Figur 4 wird bevorzugt durch den in Figur 1 und Figur 2 dargestellten Energiespeicher 44 realisiert.

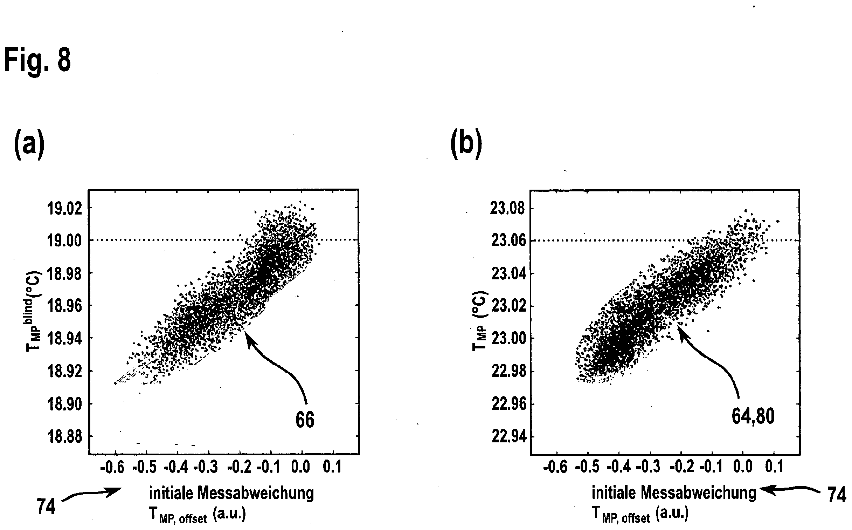

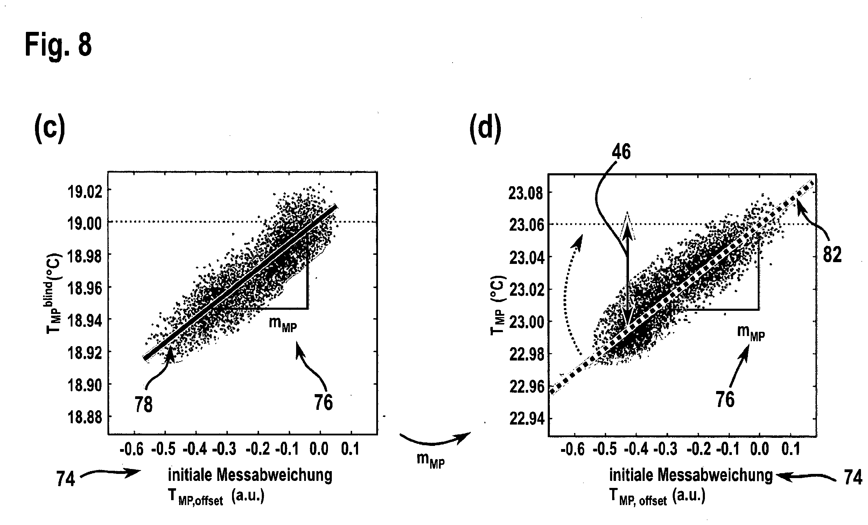

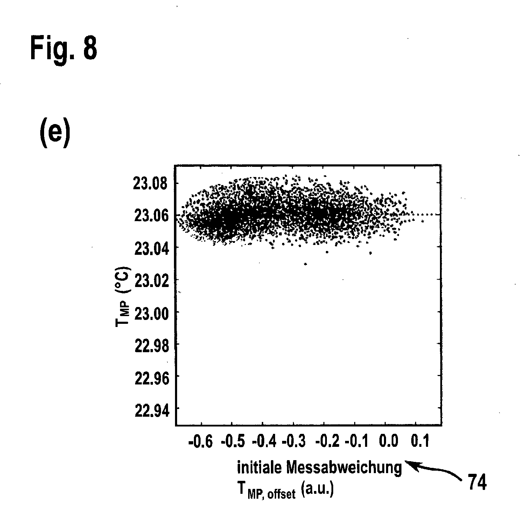

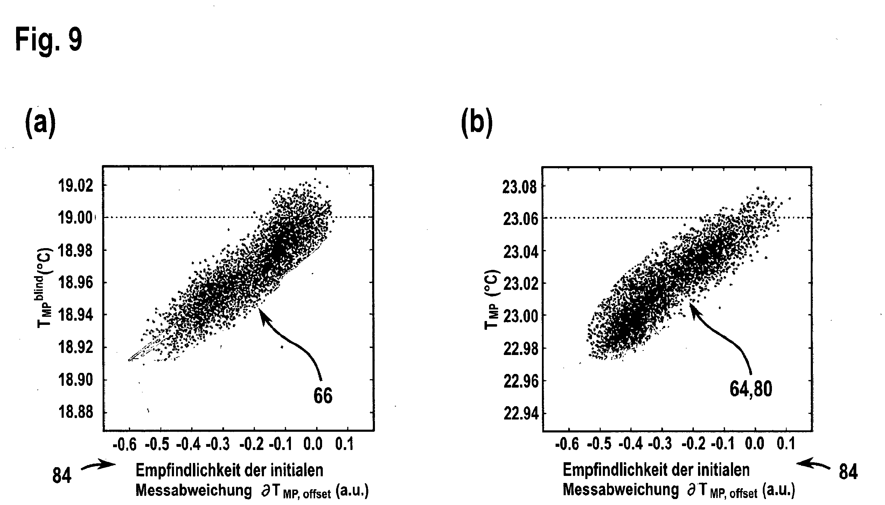

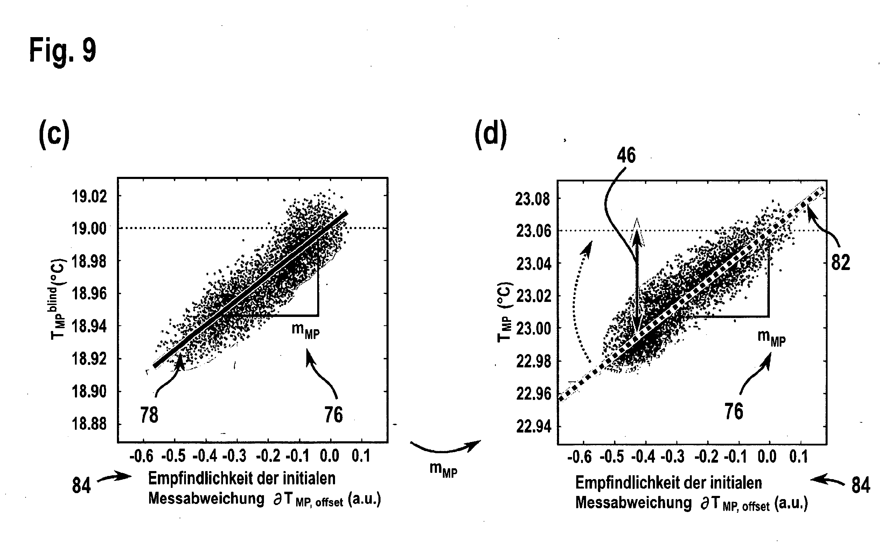

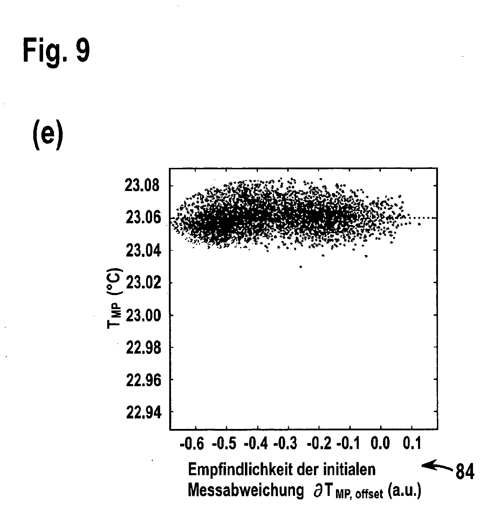

Die Auswertevorrichtung 50 dient zum Empfangen und Auswerten von Messsignalen des Infrarot-Detektorarrays 36, d.h. der Messsignal $U_{MP}$ der Messpixel 62. Die Auswertevorrichtung 50 weist eine Mehrzahl von Funktionsblöcken 60a-60f auf, die der Informationsverarbeitung, insbesondere der Auswertung der angenommenen Messsignale, dienen. Die Auswertevorrichtung 50 weist ferner einen Prozessor, einen Speicher und ein Betriebsprogramm mit Auswerte- und Berechnungsroutinen auf (jeweils nicht näher dargestellt). Die Auswertevorrichtung 50 ist dazu vorgesehen, von dem Infrarot-Detektorarray 36 bereitgestellte Messsignale, insbesondere von Messpixeln 62 bereitgestellte Messsignale $U_{MP}$, zu empfangen und auszuwerten (Funktionsblock 60a). Auf diese Weise werden Temperaturmesswerte $T_{MP}$ (Bezugszeichen 64, vgl. insbesondere Figuren 8 und 9) einer Mehrzahl von Messpixeln 62 bestimmt. Temperaturmesswerte, die ermittelt werden, während der Verschlussmechanismus 58 einen Einfall von Infrarotstrahlung auf das Infrarot-Detektorarray unterbindet, werden mit $T_{MP}^{blind}$ (Bezugszeichen 66, vgl. Figuren 8 und 9) gekennzeichnet, sind aber von der Auswertung her gesehen analog zu behandeln wie Temperaturmesswerte $T_{MP}$.

Die ausgewerteten Temperaturmesswerte, insbesondere $T_{MP}$ 64 und/oder $T_{MP}^{blind}$ 66 können von der Auswertevorrichtung 50 zur weiteren Verarbeitung der Steuervorrichtung 48 bereitgestellt werden.

Ferner ist die Auswertevorrichtung 50 dazu vorgesehen, Temperaturmesswerte $T_{MP}$ 64 um jeweils eine Pixel-zugehörige Temperatur-Driftkomponente $T_{drift}$ (Bezugszeichen 46, vgl. insbesondere Figuren 8 und 9) zu korrigieren. Diese Korrektur führt der Funktionsblock 60e durch. Die Auswertung der Pixel-zugehörigen Temperatur-Driftkomponente $T_{drift}$ 46 erfolgt durch die Funktionsblöcke 60b bis 60d. Die Verfahrensschritte, die durch die Funktionsblöcke 60a-60e erfüllt bzw. bearbeitet werden, werden im Detail im Zusammenhang mit den Figuren 6, 8 und 9 beschrieben.

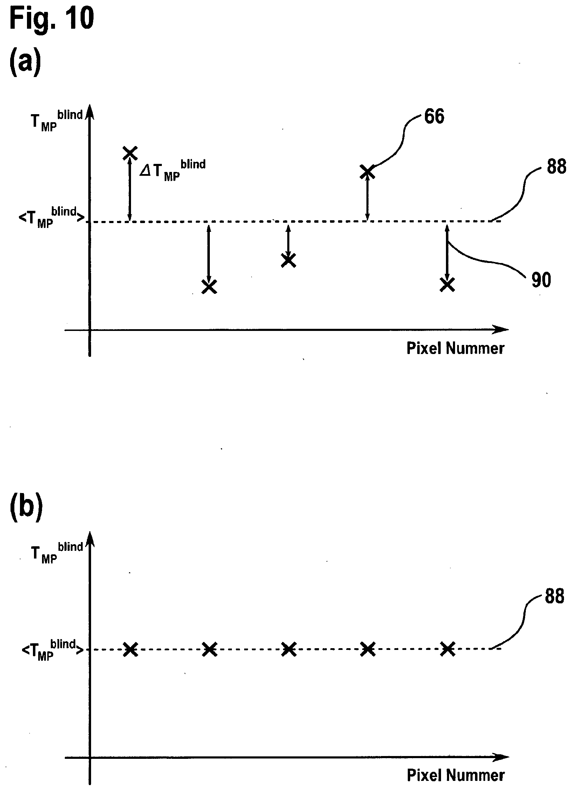

In einem alternativen oder zusätzlichen Ausführungsbeispiel des Infrarot-Messsystems 10 weist die Auswertevorrichtung 50 ferner einen Funktionsblock 60f (gestrichelt dargestellt) auf, der einer Homogenisierung bzw. einer Verringerung der Varianz der nach erfindungsgemäßem Verfahren bereits um die Temperatur-Driftkomponente $T_{drift}$ 46 korrigierten Temperaturmesswerte $T_{MP}$ 64 dient. Die Funktionsweise dieses Funktionsblocks 60f wird im Detail in der Erläuterung zu Figur 10 beschrieben.

Insgesamt ist die Wärmebildkamera 10a, insbesondere deren Auswertevorrichtung 50, dazu vorgesehen, basierend auf Messsignalen zumindest einer Mehrzahl von Messpixeln 62, insbesondere basierend auf Temperaturmesswerten $T_{MP}^{blind}$, eine Auswertung eines Wärmebilds 40 des Messbereichs 30 durchzuführen, wobei das Wärmebild 40 hinsichtlich einer Pixel-zugehörigen Temperatur-Driftkomponente $T_{drift}$ 46 korrigiert ist.

Die von der Auswertevorrichtung 50 ausgewerteten Temperaturmesswerte $T_{MP}$ 64 und Temperaturmesswerte $T_{MP}^{blind}$ 66, die Pixel-zugehörigen Temperatur-Driftkomponenten $T_{drift}$ 46, die um die Pixel-zugehörigen Temperatur-Driftkomponenten $T_{drift}$ 46 korrigierten Temperaturmesswerte $T_{MP}^{corr}$ sowie aus diesen Daten zusammengesetzte Wärmebilder, insbesondere das auszugebene Wärmebild 40, werden von der Auswertevorrichtung 50 zur weiteren Verarbeitung der Steuervorrichtung 48 bereitgestellt. Derart kann eine Ausgabe an einen Benutzer der Wärmebildkamera 10a unter Verwendung des Displays 18 der Ausgabevorrichtung erfolgen. Alternativ oder zusätzlich kann die Ausgabe an ein externes Datengerät (nicht näher dargestellt) wie beispielsweise an ein Smartphone, an einen Computer oder dergleichen unter Verwendung der Datenkommunikationsschnittstelle 52 erfolgen. Die Datenkommunikationsschnittstelle 52 ist dabei in dem dargestellten Ausführungsbeispiel als eine WLAN- und/oder Bluetooth-Schnittstelle ausgeführt. Außerdem ist eine Ausgabe an den Datenspeicher 56 zur Abspeicherung der ermittelten Daten und Wärmebilder denkbar.

Figur 5 zeigt eine schematische Aufsicht auf eine Ausführungsform des Infrarot-Detektorarrays 36 der erfindungsgemäßen Wärmebildkamera 10a aus Blickrichtung der einfallenden Messstrahlung. Jedes Messpixel 62 ist hier vereinfacht als ein Quadrat repräsentiert. Beispielhaft ist die Mehrzahl von Messpixeln 62 Matrixartig in Form eines Arrays 88 an der Oberfläche 70 des Infrarot-Detektorarrays 36 angeordnet. Die Anzahl der Messpixel 62 beträgt in diesem Ausführungsbeispiel beispielhaft 42×32. Beliebige andere Werte sind denkbar.

Im Folgenden wird das erfindungsgemäße Verfahren anhand der Figuren 6 bis 9 erklärt.

In Figur 6 ist ein Verfahrensdiagramm dargestellt, das eine Ausführungsform des erfindungsgemäßen Verfahrens zur kontaktfreien Ermittlung der Temperatur der Oberfläche 22, insbesondere zur kontaktfreien Ermittlung eines Wärmebilds 40 der Oberfläche 22, wiedergibt. Das Verfahren ist dazu vorgesehen, von einer Wärmebildkamera 10a betrieben zu werden, wie sie im Zusammenhang mit den Figuren 1 bis 5 vorgestellt wurde.

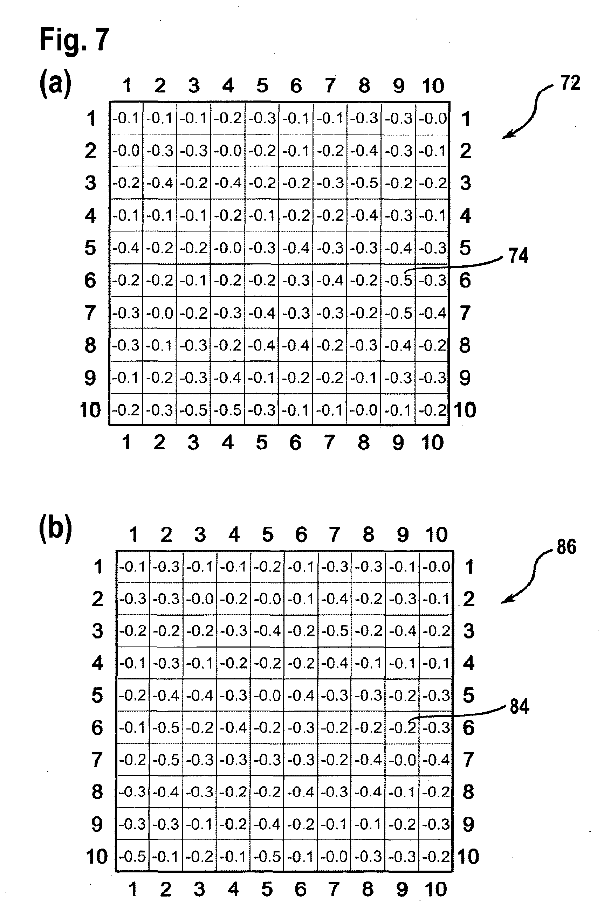

Ausgehend von dem in Figur 3 dargestellten Messszenario ist ein Benutzer der Wärmebildkamera 10a an einer Untersuchung der Temperaturverteilung der Oberfläche 22 eines Gegenstands 24 interessiert. Der Benutzer richtet zur Vermessung der Oberfläche 22 die Wärmebildkamera 10a auf den zu untersuchenden Gegenstand 24. Währenddessen erfasst die Wärmebildkamera 10a mit dem Infrarot-Detektorarray 36 kontinuierlich Infrarotstrahlung aus dem Messbereich 30 und zeigt währenddessen kontinuierlich ein unkorrigiertes Wärmebild auf dem Display 18 an. In einem ersten Verfahrensschritt 200 betätigt der Benutzer den Trigger 20a der Wärmebildkamera 10a und initiiert dadurch die Bestimmung der Temperatur-Driftkomponenten $T_{drift}$ 46 sowie die Korrektur der ermittelten Temperaturmesswerte $T_{MP}$ 64 der Messpixel 62. In einem alternativen Ausführungsbeispiel des Verfahrens kann diese Initiierung auch automatisiert, insbesondere in zeitlichen Abständen wiederholt oder quasi-kontinuierlich, erfolgen (vgl. gestrichelter Pfeil 228 in Figur 7).

Anschließend leitet die Steuervorrichtung 48 die zu dem Zeitpunkt der Initiierung von dem Infrarot-Detektorarray 36 bereitgestellten Messsignale $U_{MP}$ an die Auswertevorrichtung 50 weiter. In Verfahrensschritt 202 bestimmt die Auswertevorrichtung 50 die Temperaturmesswerte Temperaturmesswerte $T_{MP}$ 64 einer Mehrzahl von Messpixeln 62 aus deren Messsignalen $U_{MP}$. Diese Temperaturmesswerte $T_{MP}$ sind die in diesem Ausführungsbeispiel nach erfindungsgemäßem Verfahren zu korrigierenden Temperaturmesswerte. Die Bestimmung der Temperaturmesswerte $T_{MP}$ aus den Messsignalen erfolgt in dem Funktionsblock 60a der Auswertevorrichtung 50, vgl. Figur 4. Dabei wandelt der Funktionsblock 60a die jeweiligen Messsignale $U_{MP}$ in Temperaturmesswerte $T_{MP}$ 64 um. Diese Temperaturmesswerte $T_{MP}$ 64 dienen der Erzeugung eines Wärmebilds 40 von dem zu untersuchenden Gegenstand 24. Ziel des weiteren Verfahrens ist es, diese Temperaturmesswerte $T_{MP}$ 64 einer Korrektur hinsichtlich der Temperatur-Driftkomponente $T_{drift}$ 46 zu unterziehen.

Dazu wird in Verfahrensschritt 204 zumindest zeitweise ein Einfall von Infrarotstrahlung auf das Infrarot-Detektorarray 36 mittels des Verschlussmechanismus 58 des Infrarot-Messsystems 10 unterbunden, währenddessen die Temperaturmesswerte $T_{MP}^{blind}$ 66 in Verfahrensschritt 206 analog zu Verfahrensschritten 202 bestimmt werden. Diese von einfallender Infrarotstrahlung unabhängigen Temperaturmesswerte $T_{MP}^{blind}$ 66 bilden die erfindungsgemäße Grundlage der Korrektur um die Temperatur-Driftkomponente $T_{drift}$ 46.

Anschließend lädt die Auswertevorrichtung 50 aus dem Datenspeicher 56 die "initialen Offset-Karte" 72, wie sie in Figur 7a dargestellt ist. Mittels der initialen Offset-Karte 72 ordnet die Auswertevorrichtung 50 in Verfahrensschritt 208 den Temperaturmesswerten $T_{MP}^{blind}$ 66 einer (prinzipiell beliebigen) Mehrzahl von Messpixeln 62 eindeutige initiale Messabweichungen $T_{MP,offset}$ 74 zu. In Figur 7a (und auch 7b) ist die eindeutige Identifikation der Pixel beispielhaft jeweils über deren Zeilen- und Spaltennummer gewährleistet. Dabei bildet die Auswertevorrichtung 50 durch das Auslesen von zu den jeweiligen Messpixeln 62 zugeordneten initialen Messabweichungen $T_{MP,offset}$ 74 aus der initialen Offset-Karte 72 Wertepaare ($T_{MP}^{blind}$, $T_{MP,offset}$) für jedes auszuwertende Messpixel 62. Der Verfahrensschritt 208 wird in dem Funktionsblock 60b der Auswertevorrichtung 50, vgl. Figur 4, durchgeführt.

Die Wertepaare ($T_{MP}^{blind}$, $T_{MP,offset}$) lassen sich unter Auftragung der ermittelten Temperaturmesswerte $T_{MP}^{blind}$ 66 auf einer Ordinatenachse gegen die initialen Messabweichungen $T_{MP,offset}$ 74 auf der Abszissenachse darstellen. Anschließend berechnet die Auswertevorrichtung 50 in Verfahrensschritt 210 das Temperatur-Driftverhalten $m_{MP}$ 76 der Messpixel 62 aus den Temperaturmesswerten $T_{MP}^{blind}$ 66 der Messpixel 62 als Geradensteigung (Proportionalitätskonstante) einer Gerade 78, vgl. Figur 8c, die die aufgetragenen Wertepaare besonders gut modelliert. Insbesondere gilt für diese Gerade 78 die allgemeine Gleichung

$$T_{MP}^{blind} = m_{MP} \cdot (T_{MP,offset}^{0} - T_{MP,offset})$$

mit dem Abszissenachsenabschnitt $T_{MP,offset}^{0}$ und dem Temperatur-Driftverhalten $m_{MP}$ 76 der Messpixel 62 als Proportionalitätskonstante. Die Bestimmung des Temperatur-Driftverhaltens $m_{MP}$ 76 der Messpixel 62 erfolgt in dem Funktionsblock 60c der Auswertevorrichtung 50, vgl. Figur 4.

In Verfahrensschritt 212 bestimmt die Auswertevorrichtung 50 die Pixel-abhängigen Temperatur-Driftkomponenten $T_{drift}$ 46 für die bereits ermittelten Temperaturmesswerte $T_{MP}$ 64 (nicht $T_{MP}^{blind}$ 66), die um die Temperatur-Driftkomponenten $T_{drift}$ 46 korrigiert werden sollen - d.h. für die die Temperaturmesswerte $T_{MP}$ in Verfahrensschritt 202 bestimmt wurden. Zur Bestimmung der Temperatur-Driftkomponenten $T_{drift}$ 46 verwendet das erfindungsgemäße Verfahren das aus den Temperaturmesswerten $T_{MP}^{blind}$ 66 bestimmte Temperatur-Driftverhalten $m_{MP}$ 76 der Messpixel 62.

Zunächst bestimmt die Auswertevorrichtung 50 nun zu jedem auszuwertenden Messpixel 62, für den ein zu korrigierender Temperaturmesswert $T_{MP}$ 64 vorliegt, die zugehörigen initialen Messabweichungen $T_{MP,offset}$ 74 aus der im Zusammenhang mit Verfahrensschritt 208 geladenen initialen Offset-Karte 72 (vgl. Figur 7a). Die über die initialen Messabweichungen $T_{MP,offset}$ 74 (Abszisse) aufgetragenen Temperaturmesswerte $T_{MP}$ 66 (Ordinate) einer Mehrzahl von Messpixeln 62 sind in der Figur 8b als eine Punktewolke 80 dargestellt. Daraufhin kann eine zu einem Messpixel 62 gehörende Temperatur-Driftkomponente $T_{drift}$ 46 als Produkt aus dem Temperatur-Driftverhalten $m_{MP}$ 76 und der zu dem entsprechenden Messpixel 62 gehörenden initialen Messabweichung $T_{MP,offset}$ 74 gemäß der Formel

$$T_{drift} = m_{MP} \cdot (T_{MP,offset}^{0} - T_{MP,offset})$$

berechnet werden. Dies ist in der Figur 8d als die gestrichelte, berechnete Gerade 82 dargestellt, auf der die von der initialen Messabweichung $T_{MP,offset}$ 74 (Abszissenachse) abhängigen Werte für die Temperatur-Driftkomponente $T_{drift}$ 46 liegen. Die Bestimmung des Pixel-abhängigen Temperatur-Driftverhaltens $T_{drift}$ 46 gemäß Verfahrensschritt 212 erfolgt in dem Funktionsblock 60d der Auswertevorrichtung 50, vgl. Figur 4.

Somit bestimmt die Auswertevorrichtung 50 in den Verfahrensschritten 206 bis 212 die Temperatur-Driftkomponenten $T_{drift}$ 46 aus den Temperaturmesswerten $T_{MP}^{blind}$ 66 der Messpixel 64 unter Verwendung der Funktionsblöcke 60a bis 60d der Auswertevorrichtung 50.

In Verfahrensschritt 214 erfolgt die abschließende tatsächliche Korrektur der Temperaturmesswerte $T_{MP}$ 66 der Messpixel 62 um die für das jeweilige Messpixel 62 bestimmte Temperatur-Driftkomponente $T_{drift}$ 46 durch Subtraktion beider Werte. Gemäß der Darstellung in Figur 8d und 8e wird von den Werten der Punktewolke 80 die Gerade 82 subtrahiert, sodass diese Korrektur durch die Drehung der Punktewolke 80, die die Temperaturmesswerte $T_{MP}$ 64 der Messpixel 62 repräsentiert, veranschaulicht werden kann (linker Pfeil in Figur 8d). Die Durchführung von Verfahrensschritt 214 erfolgt in Funktionsblock 60e der Auswertevorrichtung 50, vgl. Figur 4.

In einer alternativen oder zusätzlichen Ausführungsform des Verfahrens kann an Stelle der initialen Messabweichungen $T_{MP,offset}$ 74 auch die "Empfindlichkeit der initialen Messabweichungen $\partial T_{MP,offset}$ gegenüber Alterungseinflüssen" 84 der Messpixel 62 verwendet werden. Äquivalent zu den Darstellungen in Figur 8 und in Figur 6 erfolgt dann die Auswertung derart, dass zur Bestimmung der Temperatur-Driftkomponenten $T_{drift}$ 46 das Temperatur-Driftverhalten $m_{MP}^{blind}$ 76 der Messpixel 62 als Proportionalitätskonstante (Geradensteigung) zwischen Empfindlichkeiten der initialen Messabweichungen $\partial T_{MP,offset}$ 84 der Messpixel 62 und Temperaturmesswerten $T_{MP}^{blind}$ 66 bestimmt wird (vgl. Äquivalenz von Figur 8 und Figur 9 bis auf Abszissen-Achsenbeschriftung). Ferner werden, äquivalent zu Figur 8d, die Temperatur-Driftkomponenten $T_{drift}$ 46 aus dem Temperatur-Driftverhalten $m_{MP}$ 76 bestimmt, indem die Temperatur-Driftkomponenten $T_{drift}$ 46 der jeweiligen Messpixel 62 in Form einer Funktion als Produkt von Temperatur-Driftverhalten $m_{MP}$ 76 und Empfindlichkeiten der initialen Messabweichungen $\partial T_{MP,offset}$ 110 der jeweiligen Messpixel 62 berechnet werden (vgl. Äquivalenz von Figur 8 und Figur 9 bis auf Abszissen-Achsenbeschriftung). Insbesondere wird in diesem Ausführungsbeispiel des erfindungsgemäßen Verfahrens auf eine in dem Datenspeicher 56 bereitgehaltene "initiale Driftanfälligkeit-Karte" 86 zurückgegriffen (vgl. Figur 7b). Äquivalent zu dem bereits beschriebenen Verfahren ordnet die Auswertevorrichtung 50 dann in einem dem Verfahrensschritt 208 äquivalenten Verfahrensschritt den Temperaturmesswerten $T_{MP}^{blind}$ 66 einer Mehrzahl von Messpixeln 62 unter Verwendung der initialen Driftanfälligkeit-Karte 86 (Figur 7b) eindeutige Empfindlichkeiten der initialen Messabweichungen $\partial T_{MP,offset}$ 84 zu.

In einem alternativen oder zusätzlichen Ausführungsbeispiel können die Temperaturmesswerte $T_{MP}$ 64 homogenisiert werden. In dem in Figur 6 gezeigten Ausführungsbeispiel des erfindungsgemäßen Verfahrens kann diese Homogenisierung im Anschluss an die Korrektur der Temperaturmesswerte $T_{MP}$ 64 der Messpixel 62 um die Temperatur-Driftkomponente $T_{drift}$ 46 erfolgen, d.h. nach Verfahrensschritt 214. Alternativ oder zusätzlich kann die Homogenisierung auch zu einem beliebigen anderen Zeitpunkt erfolgen, beispielsweise vor der Berechnung der Temperatur-Driftkomponente $T_{drift}$ 46, d.h. vor Verfahrensschritt 204.

In Verfahrensschritt 216 wird nun zunächst der Einfall von Infrarotstrahlung auf das Infrarot-Detektorarray 36 mittels des Verschlussmechanismus 58 unterbunden und die Temperaturmesswerte $T_{MP}^{blind}$

66 ausgelesen. In Figur 10a sind beispielhaft fünf Temperaturmesswerte $T_{MP}^{blind}$ 66 in einem Diagramm aufgetragen. Anschließend wird in Verfahrensschritt 218 aus diesen Temperaturmesswerten $T_{MP}^{blind}$ 66 ein Mittelwert $<T_{MP}^{blind}>$ 88 berechnet, der der Temperatur des Verschlussmechanismus 58 sehr nahekommt. Die tatsächliche Temperatur des Verschlussmechanismus 58 ist dabei unerheblich. Der Mittelwert $<T_{MP}^{blind}>$ 88 ist in Figur 10a als eine gestrichelte Linie dargestellt. Die Berechnung einer Pixel-abhängigen Abweichung $\Delta T_{MP}^{blind}$ 90 von dem Mittelwert $<T_{MP}^{blind}>$ 88 (kleine Pfeile in Figur 10a) für die ausgelesenen Messpixel 62 erlaubt nun, jedes Messpixel 62 um genau diese Abweichung $\Delta T_{MP}^{blind}$ 90 in Verfahrensschritt 2220 zu korrigieren und somit die Temperaturmesswerte $T_{MP}^{blind}$ 66 zu homogenisieren bzw. dem Mittelwert $<T_{MP}^{blind}>$ 88 anzugleichen. Letzteres ist in Figur 10b dargestellt, in der die Temperaturmesswerte $T_{MP}^{blind}$ 66 nach erfolgter Homogenisierung auf der den Mittelwert $<T_{MP}^{blind}>$ 88 darstellenden gestrichelten Linie liegen. Die unter Verwendung der Temperaturmesswerte $T_{MP}^{blind}$ 66 bestimmten Abweichung $\Delta T_{MP}^{blind}$ 90 sind auf die noch zu bestimmenden oder bereits bestimmten Temperaturmesswerte $T_{MP}$ 64 übertragbar, sodass erfindungsgemäß ebenfalls eine Homogenisierung der bei offenem Verschlussmechanismus 58 ermittelten Temperaturmesswerte $T_{MP}$ 64 erfolgen kann.

Die Durchführung der Verfahrensschritte 216 bis 220 erfolgt in Funktionsblock 60f der Auswertevorrichtung 50, vgl. Figur 4.

Abschließend wird in Verfahrensschritt 222 das korrigierte und eventuell homogenisierte Wärmebild 40 unter Verwendung des Displays 18 an den Benutzer der Wärmebildkamera 10a ausgegeben.

## Patentansprüche

1. Verfahren zur kontaktfreien Ermittlung einer Temperatur einer Oberfläche (22), insbesondere zur kontaktfreien Ermittlung einer Temperaturverteilung einer Oberfläche (22), mittels eines Infrarot-Messsystems (10, 10a), wobei das Infrarot-Messsystem (10, 10a) zumindest aufweist:

   - ein Infrarot-Detektorarray (36) mit einer Mehrzahl von Messpixeln (62), die jeweils ein Messsignal zur Ermittlung eines von einer Intensität der einfallenden Infrarotstrahlung abhängigen Temperaturmesswerts $T_{MP}$ (64) bereitstellen, und
   - einen Verschlussmechanismus (58) zum Unterbinden eines Einfalls von Infrarotstrahlung auf das Infrarot-Detektorarray (36),
   wobei das Verfahren zumindest folgende Schritte umfasst:

      - Bestimmen der Temperaturmesswerte

$T_{MP}$ (64) einer Mehrzahl von Messpixeln (62);
      - Korrigieren von Temperaturmesswerten $T_{MP}$ (64) um jeweils eine Pixel-zugehörige Temperatur-Driftkomponente $T_{drift}$ (46),

wobei

      - zumindest zeitweise ein Einfall von Infrarotstrahlung auf das Infrarot-Detektorarray (36) mittels des Verschlussmechanismus (58) des Infrarot-Messsystems (10, 10a) unterbunden wird, währenddessen Temperaturmesswerte $T_{MP}^{blind}$ (66) ermittelt werden, wobei die Temperatur-Driftkomponenten $T_{drift}$ (46), um die sich die Temperaturmesswerte $T_{MP}$ (64) zeitabhängig verschieben, unter Verwendung von Temperaturmesswerten $T_{MP}^{blind}$ (66) bestimmt werden, wobei zur Bestimmung der Temperatur-Driftkomponenten $T_{drift}$ (46) ein Temperatur-Driftverhalten $m_{MP}$ (76) der Messpixel (62) aus Temperaturmesswerten $T_{MP}^{blind}$ (66) bestimmt wird, **dadurch gekennzeichnet, dass** zur Bestimmung der Temperatur-Driftkomponenten $T_{drift}$ (46) das Temperatur-Driftverhalten $m_{MP}$ (76) der Messpixel (62) als Proportionalitätskonstante zwischen initialen Messabweichungen $T_{MP,offset}$ (74) der Messpixel (62) und Temperaturmesswerten $T_{MP}^{blind}$ (66) bestimmt wird.

2. Verfahren nach Anspruch 1, **dadurch gekennzeichnet, dass** zur Bestimmung der Temperatur-Driftkomponenten $T_{drift}$ (46) das Temperatur-Driftverhalten $m_{MP}$ (76) der Messpixel (62) als Proportionalitätskonstante zwischen Empfindlichkeiten der initialen Messabweichungen $\partial T_{MP,offset}$ gegenüber Alterungseinflüssen (84) der Messpixel (62) und Temperaturmesswerten $T_{MP}^{blind}$ (66) bestimmt wird.

3. Verfahren nach Anspruch 1 oder 2, **dadurch gekennzeichnet, dass** die Temperatur-Driftkomponenten $T_{drift}$ (46) aus dem Temperatur-Driftverhalten $m_{MP}$ (76) der Messpixel (62) bestimmt werden, indem die Temperatur-Driftkomponenten $T_{drift}$ (46) der jeweiligen Messpixel (62) in Form einer Funktion als Produkt von Temperatur-Driftverhalten $m_{MP}$ (76) und initialen Messabweichungen $T_{MP,offset}$ (74) der jeweiligen Messpixel (62) berechnet werden.

4. Verfahren nach Anspruch 3, **dadurch gekennzeichnet, dass** die Temperatur-Driftkomponenten $T_{drift}$ (46) aus dem Temperatur-Driftverhalten $m_{MP}$ (76) der Messpixel (62) bestimmt werden, indem die Temperatur-Driftkomponenten $T_{drift}$ (46) der jeweiligen Messpixel (62) in Form einer Funktion als Produkt von Temperatur-Driftverhalten $m_{MP}$ (76) und Empfindlichkeiten der initialen Messabweichungen $\partial T_{MP,offset}$ gegenüber Alterungseinflüssen (84) der jeweiligen Messpixel (62) berechnet werden.

5. Verfahren nach einem der vorhergehenden Ansprüche, **dadurch gekennzeichnet, dass** die Temperatur-Driftkomponenten $T_{drift}$ (46) in zeitlichen Abständen wiederholt, insbesondere regelmäßig, bevorzugt kontinuierlich oder quasi-kontinuierlich, bestimmt werden.

6. Verfahren nach einem der vorhergehenden Ansprüche, **dadurch gekennzeichnet, dass** in einem weiteren Verfahrensschritt ein Einfall von Infrarotstrahlung auf das Infrarot-Detektorarray (36) mittels des Verschlussmechanismus (58) des Infrarot-Messsystems (10, 10a) unterbunden wird und die Temperaturmesswerte $T_{MP}$ (64) jeweils um eine Pixelabhängige Abweichung $\Delta T_{MP}^{blind}$ (90) von einem Mittelwert $<T_{MP}^{blind}>$ (88) aller bei unterbundenem Einfall von Infrarotstrahlung gemessenen Temperaturmesswerten $T_{MP}^{blind}$ (66) korrigiert werden.

7. Infrarot-Messsystem (10, 10a), insbesondere handgehaltene Wärmebildkamera (10a), zur kontaktfreien Ermittlung einer Temperaturverteilung einer Oberfläche (22), aufweisend zumindest:

   - ein Infrarot-Detektorarray (36) mit einer Mehrzahl von Messpixeln (62), die jeweils ein Messsignal zur Ermittlung eines von einer Intensität der einfallenden Infrarotstrahlung abhängigen Temperaturmesswerts $T_{MP}$ (64) bereitstellen, und
   - einen Verschlussmechanismus zum Unterbinden eines Einfalls von Infrarotstrahlung auf das Infrarot-Detektorarray (36),

   **gekennzeichnet durch** eine Auswertevorrichtung (50), die dazu eingerichtet ist, das Verfahren nach einem der vorhergehenden Ansprüche durchzuführen.

**Claims**

1. Method for contactlessly establishing a temperature of a surface (22), in particular for contactlessly establishing a temperature distribution on a surface (22), by means of an infrared measurement system (10, 10a), wherein the infrared measurement system (10, 10a) comprises at least:

   - an infrared detector array (36) with a plurality of measurement pixels (62), which each provide a measurement signal for establishing a temperature measurement value $T_{MP}$ (64) which is dependent on an intensity of the incident infrared radiation, and
   - a closure mechanism (58) for suppressing an incidence of infrared radiation onto the infrared detector array (36),

   wherein the method comprises at least the following steps:

   - determining the temperature measurement values $T_{MP}$ (64) of a plurality of measurement pixels (62);
   - correcting temperature measurement values $T_{MP}$ (64) by in each case a pixel-associated temperature drift component $T_{drift}$ (46),

   wherein

   - an incidence of infrared radiation onto the infrared detector array (36) is at least temporarily suppressed by means of the closure mechanism (58) of the infrared measurement system (10, 10a) while temperature measurement values $T_{MP}^{blind}$ (66) are being established, wherein the temperature drift components $T_{drift}$ (46), by which the temperature measurement values $T_{MP}$ (64) shift in time-dependent fashion, are determined using temperature measurement values $T_{MP}^{blind}$ (66), wherein a temperature drift behaviour $m_{MP}$ (76) of the measurement pixels (62) is determined from temperature measurement values $T_{MP}^{blind}$ (66) for the purposes of determining the temperature drift components $T_{drift}$ (46), **characterized in that** the temperature drift behaviour $m_{MP}$ (76) of the measurement pixels (62) is determined as a constant of proportionality between initial measurement deviations $T_{MP,offset}$ (74) of the measurement pixels (62) and temperature measurement values $T_{MP}^{blind}$ (66) for the purposes of determining the temperature drift components $T_{drift}$ (46).

2. Method according to Claim 1, **characterized in that** the temperature drift behaviour $m_{MP}$ (76) of the measurement pixels (62) is determined as a constant of proportionality between sensitivities of the initial measurement deviations $\partial T_{MP,offset}$ in relation to influences of aging (84) of the measurement pixels (62) and temperature measurement values $T_{MP}^{blind}$ (66) for the purposes of determining the temperature drift components $T_{drift}$ (46).

3. Method according to Claim 1 or 2, **characterized in that** the temperature drift components $T_{drift}$ (46) are determined from the temperature drift behaviour $m_{MP}$ (76) of the measurement pixels (62) by virtue of the temperature drift components $T_{drift}$ (46) of the respective measurement pixels (62) being calculated in the form of a function as a product of temperature drift behaviour $m_{MP}$ (76) and initial measurement deviations $T_{MP,offset}$ (74) of the respective measurement pixels (62).

**4.** Method according to Claim 3, **characterized in that** the temperature drift components $T_{drift}$ (46) are determined from the temperature drift behaviour $m_{MP}$ (76) of the measurement pixels (62) by virtue of the temperature drift components $T_{drift}$ (46) of the respective measurement pixels (62) being calculated in the form of a function as a product of temperature drift behaviour $m_{MP}$ (76) and sensitivities of the initial measurement deviations $\partial T_{MP,offset}$ in relation to influences of aging (84) of the respective measurement pixels (62).

**5.** Method according to any one of the preceding claims, **characterized in that** the temperature drift components $T_{drift}$ (46) are determined repeatedly at time intervals, in particular regularly, preferably continuously or virtually continuously.

**6.** Method according to any one of the preceding claims, **characterized in that,** in a further method step, an incidence of infrared radiation onto the infrared detector array (36) is suppressed by means of the closure mechanism (58) of the infrared measurement system (10, 10a) and the temperature measurement values $T_{MP}$ (64) are each corrected by a pixel-dependent deviation $\Delta T_{MP}^{blind}$ (90) from a mean value $<T_{MP}^{blind}>$ (88) of all temperature measurement values $T_{MP}^{blind}$ (66) measured in the case of a suppressed incidence of infrared radiation.

**7.** Infrared measurement system (10, 10a), in particular handheld thermal imaging camera (10a), for contactlessly establishing a temperature distribution on a surface (22), comprising at least:

- an infrared detector array (36) with a plurality of measurement pixels (62), which each provide a measurement signal for establishing a temperature measurement value $T_{MP}$ (64) which is dependent on an intensity of the incident infrared radiation, and
- a closure mechanism for suppressing an incidence of infrared radiation onto the infrared detector array (36), **characterized by** an evaluation apparatus (50), which is configured to carry out the method according to any one of the preceding claims.

**Revendications**

**1.** Procédé permettant d'établir sans contact une température d'une surface (22), en particulier permettant d'établir sans contact un champ de température d'une surface (22), au moyen d'un système de mesure par infrarouge (10, 10a), dans lequel le système de mesure par infrarouge (10, 10a) présente au moins :

- une matrice de détecteurs d'infrarouge (36) avec une pluralité de pixels de mesure (62) qui fournissent respectivement un signal de mesure pour établir une valeur de mesure de température $T_{MP}$ (64) dépendant d'une intensité du rayonnement infrarouge incident, et
- un mécanisme obturateur (58) pour empêcher une incidence d'un rayonnement infrarouge sur la matrice de détecteurs d'infrarouge (36), le procédé comprenant au moins les étapes suivantes consistant à :

- déterminer les valeurs de mesure de température $T_{MP}$ (64) d'une pluralité de pixels de mesure (62) ;
- corriger des valeurs de mesure de température $T_{MP}$ (64) respectivement par une composante de dérive de température $T_{drift}$ (46) associée à un pixel,

dans lequel

- une incidence d'un rayonnement infrarouge sur la matrice de détecteurs d'infrarouge (36) est empêchée au moins temporairement au moyen du mécanisme obturateur (58) du système de mesure par infrarouge (10, 10a), pendant que des valeurs de mesure de température $T_{MP}^{blind}$ (66) sont établies, dans lequel les composantes de dérive de température $T_{drift}$ (46) par lesquelles les valeurs de mesure de température $T_{MP}$ (64) se décalent en fonction du temps sont déterminées en utilisant des valeurs de mesure de température $T_{MP}^{blind}$ (66), dans lequel, pour déterminer les composantes de dérive de température $T_{drift}$ (46), un comportement de dérive de température $m_{MP}$ (76) des pixels de mesure (62) est déterminé à partir des valeurs de mesure de température $T_{MP}^{blind}$ (66),

**caractérisé en ce que** pour déterminer les composantes de dérive de température $T_{drift}$ (46), le comportement de dérive de température $m_{MP}$ (76) des pixels de mesure (62) est déterminé comme une constante de proportionnalité entre des écarts de mesure initiaux $T_{MP,offset}$ (74) des pixels de mesure (62) et des valeurs de mesure de température $T_{MP}^{blind}$ (66).

2. Procédé selon la revendication 1, **caractérisé en ce que** pour déterminer les composantes de dérive de température $T_{drift}$ (46), le comportement de dérive de température $m_{MP}$ (76) des pixels de mesure (62) est déterminé comme une constante de proportionnalité entre des sensibilités des écarts de mesure initiaux $\delta T_{MP,offset}$ par rapport à des facteurs de vieillissement (84) des pixels de mesure (62) et des valeurs de mesure de température $T_{MP}^{blind}$ (66).

3. Procédé selon la revendication 1 ou 2, **caractérisé en ce que** les composantes de dérive de température $T_{drift}$ (46) sont déterminées à partir du comportement de dérive de température $m_{MP}$ (76) des pixels de mesure (62) **en ce que** les composantes de dérive de température $T_{drift}$ (46) des pixels de mesure (62) respectifs sont calculées sous la forme d'une fonction comme un produit du comportement de dérive de température $m_{MP}$ (76) et des écarts de mesure initiaux $T_{MP,offset}$ (74) des pixels de mesure (62) respectifs.

4. Procédé selon la revendication 3, **caractérisé en ce que** les composantes de dérive de température $T_{drift}$ (46) sont déterminées à partir du comportement de dérive de température $m_{MP}$ (76) des pixels de mesure (62) **en ce que** les composantes de dérive de température $T_{drift}$ (46) des pixels de mesure (62) respectifs sont calculées sous la forme d'une fonction comme un produit du comportement de dérive de température $m_{MP}$ (76) et des sensibilités des écarts de mesure initiaux $\delta T_{MP,offset}$ par rapport à des facteurs de vieillissement (84) des pixels de mesure (62) respectifs.

5. Procédé selon l'une quelconque des revendications précédentes, **caractérisé en ce que** les composantes de dérive de température $T_{drift}$ (46) sont déterminées de manière répétée à des intervalles de temps, en particulier régulièrement, de préférence de manière continue ou quasi continue.

6. Procédé selon l'une quelconque des revendications précédentes, **caractérisé en ce que** dans une autre étape de procédé, une incidence d'un rayonnement infrarouge sur la matrice de détecteurs d'infrarouge (36) est empêchée au moyen du mécanisme obturateur (58) du système de mesure par infrarouge (10, 10a), et les valeurs de mesure de température $T_{MP}$ (64) sont corrigées respectivement par un écart $\Delta T_{MP}^{blind}$ (90) dépendant d'un pixel par rapport à une moyenne $\langle T_{MP}^{blind} \rangle$ (88) de toutes les valeurs de mesure de température $T_{MP}^{blind}$ (66) mesurées lorsque l'incidence du rayonnement infrarouge est empêchée.

7. Système de mesure par infrarouge (10, 10a), en particulier caméra thermique portative (10a), pour l'établissement sans contact d'un champ de température d'une surface (22), présentant au moins :

- une matrice de détecteurs d'infrarouge (36) pourvue d'une pluralité de pixels de mesure (62) qui fournissent respectivement un signal de mesure pour établir une valeur de mesure de température $T_{MP}$ (64) dépendant du rayonnement infrarouge incident, et
- un mécanisme obturateur pour empêcher une incidence d'un rayonnement infrarouge sur la matrice de détecteurs d'infrarouge (36),

**caractérisé par** un dispositif d'évaluation (50) qui est conçu pour exécuter le procédé selon l'une quelconque des revendications précédentes.

**Fig. 1**

# Fig. 2

# Fig. 3

**Fig. 4**

# Fig. 5

# Fig. 6

# Fig. 7

## (a)

72

74

| | 1 | 2 | 3 | 4 | 5 | 6 | 7 | 8 | 9 | 10 | |
|---|---|---|---|---|---|---|---|---|---|---|---|
| **1** | -0.1 | -0.1 | -0.1 | -0.2 | -0.3 | -0.1 | -0.1 | -0.3 | -0.3 | -0.0 | **1** |
| **2** | -0.0 | -0.3 | -0.3 | -0.0 | -0.2 | -0.1 | -0.2 | -0.4 | -0.3 | -0.1 | **2** |
| **3** | -0.2 | -0.4 | -0.2 | -0.4 | -0.2 | -0.2 | -0.3 | -0.5 | -0.2 | -0.2 | **3** |
| **4** | -0.1 | -0.1 | -0.1 | -0.2 | -0.1 | -0.2 | -0.2 | -0.4 | -0.3 | -0.1 | **4** |
| **5** | -0.4 | -0.2 | -0.2 | -0.0 | -0.3 | -0.4 | -0.3 | -0.3 | -0.4 | -0.3 | **5** |
| **6** | -0.2 | -0.2 | -0.1 | -0.2 | -0.2 | -0.3 | -0.4 | -0.2 | -0.5 | -0.3 | **6** |
| **7** | -0.3 | -0.0 | -0.2 | -0.3 | -0.4 | -0.3 | -0.3 | -0.2 | -0.5 | -0.4 | **7** |
| **8** | -0.3 | -0.1 | -0.3 | -0.2 | -0.4 | -0.4 | -0.2 | -0.3 | -0.4 | -0.2 | **8** |
| **9** | -0.1 | -0.2 | -0.3 | -0.4 | -0.1 | -0.2 | -0.2 | -0.1 | -0.3 | -0.3 | **9** |
| **10** | -0.2 | -0.3 | -0.5 | -0.5 | -0.3 | -0.1 | -0.1 | -0.0 | -0.1 | -0.2 | **10** |
| | 1 | 2 | 3 | 4 | 5 | 6 | 7 | 8 | 9 | 10 | |

## (b)

86

84

| | 1 | 2 | 3 | 4 | 5 | 6 | 7 | 8 | 9 | 10 | |
|---|---|---|---|---|---|---|---|---|---|---|---|
| **1** | -0.1 | -0.3 | -0.1 | -0.1 | -0.2 | -0.1 | -0.3 | -0.3 | -0.1 | -0.0 | **1** |
| **2** | -0.3 | -0.3 | -0.0 | -0.2 | -0.0 | -0.1 | -0.4 | -0.2 | -0.3 | -0.1 | **2** |
| **3** | -0.2 | -0.2 | -0.2 | -0.3 | -0.4 | -0.2 | -0.5 | -0.2 | -0.4 | -0.2 | **3** |
| **4** | -0.1 | -0.3 | -0.1 | -0.2 | -0.2 | -0.2 | -0.4 | -0.1 | -0.1 | -0.1 | **4** |
| **5** | -0.2 | -0.4 | -0.4 | -0.3 | -0.0 | -0.4 | -0.3 | -0.3 | -0.2 | -0.3 | **5** |
| **6** | -0.1 | -0.5 | -0.2 | -0.4 | -0.2 | -0.3 | -0.2 | -0.2 | -0.2 | -0.3 | **6** |
| **7** | -0.2 | -0.5 | -0.3 | -0.3 | -0.3 | -0.3 | -0.2 | -0.4 | -0.0 | -0.4 | **7** |
| **8** | -0.3 | -0.4 | -0.3 | -0.2 | -0.2 | -0.4 | -0.3 | -0.4 | -0.1 | -0.2 | **8** |
| **9** | -0.3 | -0.3 | -0.1 | -0.2 | -0.4 | -0.2 | -0.1 | -0.1 | -0.2 | -0.3 | **9** |
| **10** | -0.5 | -0.1 | -0.2 | -0.1 | -0.5 | -0.1 | -0.0 | -0.3 | -0.3 | -0.2 | **10** |
| | 1 | 2 | 3 | 4 | 5 | 6 | 7 | 8 | 9 | 10 | |

## Fig. 8

(a)

(b)

# Fig. 8

**(c)**

**(d)**

EP 3 479 086 B1

**Fig. 8**

**(e)**

$T_{MP}$ (°C)

initiale Messabweichung
$T_{MP, offset}$ (a.u.)

74

**Fig. 9**

(a)

$T_{MP}^{blind}(°C)$

19.02 · 19.00 · 18.98 · 18.96 · 18.94 · 18.92 · 18.90 · 18.88

66

84

Empfindlichkeit der initialen
Messabweichung $\partial T_{MP,\,offset}$ (a.u.)

-0.6 -0.5 -0.4 -0.3 -0.2 -0.1 0.0 0.1

(b)

$T_{MP}$ (°C)

23.08 · 23.06 · 23.04 · 23.02 · 23.00 · 22.98 · 22.96 · 22.94

64,80

84

Empfindlichkeit der initialen
Messabweichung $\partial T_{MP,\,offset}$ (a.u.)

-0.6 -0.5 -0.4 -0.3 -0.2 -0.1 0.0 0.1

Fig. 9

# Fig. 9

## (e)

Empfindlichkeit der initialen
Messabweichung $\partial T_{MP, offset}$ (a.u.) ←84

## Fig. 10

### (a)

### (b)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6659639 A1
- US 20090304042 A1
- US 20090302219 A1
- US 7652251 A1
- DE 202013008745 U1
- DE 102008041750 A1
- EP 2690416 A1
- WO 2007015235 A1
- WO 0136926 A1
- US 2010193706 A1
- DE 102012208220 A1
- US 2001040216 A1
- US 2010046577 A1
- US 2005029453 A1
- US 2008210872 A1

**In der Beschreibung aufgeführte Nicht-Patentliteratur**

- Ad Hoc Radiometrie Calibration of a ThermalInfrared Camera. **VIDAS et al.** 2013 International Conference on digital image computing: techniques and applications (dicta). IEEE, 26. November 2013, 1-8
- **SCHULZ et al.** Nonuniformity correction and correctability of infrared focal plane arrays. *Optomechatronic micro/nano devices and components III: 8-10,* Oktober 2007
- **LAUSANNE ; SWITZERLAND ; OLIVIER et al.** Non-uniformity correction and thermal drift compensation of thermal infrared camera. *Proceedings Volume 9025 IS&T/SPIE Electronic imaging,* 02. Februar 2014, vol. 9025